# EUROPEAN PATENT APPLICATION

(11) **EP 4 848 789 A1**
(43) Date of publication of application: **02.12.2026**
(21) Application number: 25767199.0
(22) Date of filing: 20.02.2025
(51) Int. Cl.: H04W 24/08, H04L 5/00

(54) **PHYSICAL LAYER CONFIGURATION METHOD AND DEVICE FOR UWB RANGING**

(30) Priority: 04.03.2024 CN 202410246265; 22.03.2024 CN 202410343219
(71) Applicant: Huawei Technologies Co., Ltd., Shenzhen, Guangdong 518129 (CN)
(72) Inventor: QIAN, Bin, Shenzhen, Guangdong 518129 (CN); HUANG, Lei, Shenzhen, Guangdong 518129 (CN); YANG, Xun, Shenzhen, Guangdong 518129 (CN); CHITRAKAR, Rojan, Shenzhen, Guangdong 518129 (CN)
(74) Representative: Huawei European IPR
(86) International application number: PCT/CN2025/078295
(87) International publication number: WO 2025/185459

(57) **Abstract**

This application relates to a physical layer configuration method for UWB ranging and an apparatus. The method includes: generating and sending a common physical layer configuration field, where the common physical layer configuration field includes a first field, and the first field indicates a combination of wireless technologies used in multiple phases in an initialization and setup phase, a control phase, a ranging phase, and a report phase. According to this application, a physical layer configuration in a ranging session can be improved. This application supports UWB protocols, including 802.15 series protocols, such as 802.15.4ab or a next generation standard of 802.15.4ab, may also support protocols such as 802.11be/Wi-Fi 7/EHT, 802.11bn/Wi-Fi 8/UHR, and integrated millimeter wave/IMMW, and may also support sensing protocols, such as 802.11bf, and SparkLink/SparkLink/NearLink standard protocols.

## Description

This application claims priorities to Chinese Patent Application No. 202410246265.3, filed with the China National Intellectual Property Administration on March 4, 2024 and entitled "PHYSICAL LAYER CONFIGURATION METHOD FOR UWB RANGING AND APPARATUS", and to Chinese Patent Application No. 202410343219.5, filed with the China National Intellectual Property Administration on March 22, 2024 and entitled "PHYSICAL LAYER CONFIGURATION METHOD FOR UWB RANGING AND APPARATUS", both of which are incorporated herein by reference in their entireties.

### TECHNICAL FIELD

This application relates to the field of communication technologies, and in particular, to a physical layer configuration method for ultra-wide band (ultra-wideband, UWB) ranging and an apparatus.

### BACKGROUND

As ultra-wideband (ultra-wideband, UWB) enters the civilian field, ultra-wideband (UWB) wireless communication has become one of physical layer technologies for short-range and high-speed wireless networks. An ultra-wideband (UWB) technology is a wireless carrier communication technology that can perform data transmission, for example, by using nanosecond-level non-sinusoidal wave narrow pulses, and therefore, occupies a very wide spectrum range. Due to narrow pulses and low radiation spectrum density, a UWB system has advantages of a strong multipath resolution capability, low power consumption, high confidentiality, and the like, and is mainly used in sensing and ranging scenarios.

The institute of electrical and electronics engineers (institute of electrical and electronics engineers, IEEE) has incorporated the UWB technology into IEEE 802 series wireless standards and has released a high-speed wireless personal area network (wireless personal area network, WPAN) standard IEEE 802.15.4a based on the UWB technology, and an evolved version IEEE 802.15.4z. A next-generation UWB wireless personal area network (WPAN) standard 802.15.4ab is under discussion. One of the focuses of 802.15.4ab is the use of UWB pulses for ranging.

However, currently, a physical layer configuration for UWB ranging is incomplete.

### SUMMARY

Embodiments of this application provide a physical layer configuration method for UWB ranging and an apparatus, to improve a physical layer configuration in a ranging session, so that two ranging parties can align physical layer-related parameters, thereby supporting completion of a ranging procedure, and improving ranging efficiency and reliability.

The following describes this application from different aspects. It should be understood that mutual reference may be made to the following implementations and beneficial effects of different aspects.

According to a first aspect, this application provides a physical layer configuration method for UWB ranging. The method may be applied to an initiator (initiator) or a responder (responder). The method includes: A first communication apparatus generates and sends a common physical layer configuration field, where the common physical layer configuration field includes a first field, and the first field indicates a combination of wireless technologies used in multiple phases in an initialization and setup phase, a control phase, a ranging phase, and a report phase.

For example, the first communication apparatus may be the initiator (initiator) or the responder (responder).

It may be understood that one ranging session may include but is not limited to: an initialization and setup (initialization and setup) phase and one or more ranging cycles (ranging cycle). One ranging cycle may include a control (control) phase and a ranging (ranging) phase, and optionally further include a report (report) phase.

It may be further understood that wireless technologies (for example, narrowband and UWB) used in phases of the ranging session may be different.

Therefore, in this application, the first field in the common physical layer configuration field indicates the combination of the wireless technologies used in the multiple phases in the ranging session. This can improve a physical layer configuration in the ranging session, so that the two ranging parties can align the wireless technologies in the multiple phases in the ranging session, thereby supporting completion of the ranging procedure, and improving ranging efficiency and reliability.

According to a second aspect, this application provides a physical layer configuration method for UWB ranging. The method may be applied to an initiator or a responder. The method includes: A second communication apparatus receives and processes a common physical layer configuration field, where the common physical layer configuration field includes a first field, and the first field indicates a combination of wireless technologies used in multiple phases in an initialization and setup phase, a control phase, a ranging phase, and a report phase.

For example, that the second communication apparatus processes the common physical layer configuration field includes: the second communication apparatus interprets/parses the first field in the common physical layer configuration field, and determines the wireless technologies in the multiple phases in the initialization and setup phase, the control phase, the ranging phase, and the report phase, to subsequently transmit information by using the corresponding wireless technologies based on an indication of the first field.

For example, the second communication apparatus may be the initiator or the responder. It may be understood that when the first communication apparatus is the initiator, the second communication apparatus is the responder. When the first communication apparatus is the responder, the second communication apparatus is the initiator.

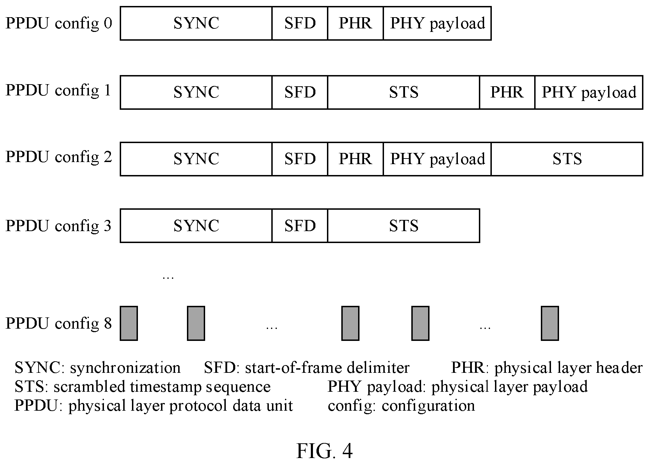

With reference to the first aspect or the second aspect, in a possible implementation, the combination of the wireless technologies used in the multiple phases includes multiple items of the following: a narrowband signal that does not share a common clock with UWB or a narrowband signal that shares a common clock with UWB is used in the initialization and setup phase; a narrowband signal that shares a common clock with UWB is used in the control phase or a UWB packet is used in the control phase; a multi-millisecond ranging packet that carries a synchronization header or a multi-millisecond ranging packet that does not carry a synchronization header is used in the ranging phase; and a narrowband signal that shares a common clock with UWB is used in the report phase or a UWB packet is used in the report phase. A physical layer protocol data unit (physical layer protocol data unit, PPDU) format of the UWB packet herein is a scrambled timestamp sequence (scrambled timestamp sequence, STS) packet configuration 0. In other words, the UWB packet herein includes a synchronization (synchronization, SYNC) field, a start-of-frame delimiter (start-of-frame delimiter, SFD) field, a physical layer header (physical layer header, PHR) field, and a physical layer payload field (PHY payload field), but does not include an STS. A PPDU format of the multi-millisecond ranging packet is a PPDU configuration 0 (as shown in FIG. 4 below).

For example, the synchronization header includes a SYNC field and an SFD field.

With reference to the first aspect, in a possible implementation, the method further includes: The first communication apparatus sends or receives a physical layer management field. The physical layer management field includes a control phase configuration field and a report phase configuration field. The control phase configuration field indicates a physical layer configuration of offset quadrature phase shift keying (offset quadrature phase shift keying, O-QPSK) modulation for the narrowband signal that shares the common clock with the UWB in the control phase. For example, when a value of the control phase configuration field ranges from 1 to 9, it indicates nine physical layer configurations of O-QPSK for the narrowband signal that shares the common clock with the UWB in the control phase, respectively. When the value is another value, it indicates reserved. The report phase configuration field indicates a physical layer configuration of O-QPSK modulation for a narrowband signal that shares a common clock with UWB in the report phase. For example, when a value of the report phase configuration field ranges from 1 to 9, it indicates nine physical layer configurations of O-QPSK for the narrowband signal that shares the common clock with the UWB in the report phase, respectively. When the value is another value, it indicates reserved.

For example, an execution sequence of sending/receiving the physical layer management field and sending the common physical layer configuration field by the first communication apparatus is not limited.

For example, the physical layer configuration of O-QPSK modulation includes but is not limited to: a rate, a SYNC length, an SFD sequence, a PHR length, and a symbol-to-chip mapping.

In this application, meanings of a control phase configuration field and a report phase configuration field in an existing physical layer management field are changed, to achieve better adaptation to the common physical layer configuration field.

With reference to the second aspect, in a possible implementation, the method further includes: The second communication apparatus receives or sends a physical layer management field. The physical layer management field includes a control phase configuration field and a report phase configuration field. The control phase configuration field indicates a physical layer configuration of O-QPSK modulation for the narrowband signal that shares the common clock with the UWB in the control phase. The report phase configuration field indicates a physical layer configuration of O-QPSK modulation for the narrowband signal that shares the common clock with the UWB in the report phase.

With reference to the first aspect or the second aspect, in a possible implementation, a length of the first field is 1 bit, 2 bits, or 3 bits. For descriptions of the length and the meaning of the first field, refer to the following descriptions in the embodiments. Details are not described herein.

With reference to the first aspect or the second aspect, in a possible implementation, the common physical layer configuration field further includes a second field. The second field may indicate whether the multi-millisecond ranging packet in the ranging phase includes the synchronization header. Alternatively, when the first field indicates that the UWB packet is used in the control phase (the PPDU format of the UWB packet is the STS packet configuration 0), the common physical layer configuration field may further include a second field. The second field may indicate whether the multi-millisecond ranging packet in the ranging phase includes the synchronization header.

For example, a length of the second field may be 1 bit. For example, when a value of the second field (1 bit) is a first value, it indicates that the multi-millisecond ranging packet in the ranging phase includes the synchronization header. When a value of the second field (1 bit) is a second value, it indicates that the multi-millisecond ranging packet in the ranging phase does not include the synchronization header. The first value is different from the second value. For example, the first value and the second value are 0 and 1, respectively.

In this application, considering that the synchronization header is an optional part of the multi-millisecond ranging packet, the second field indicates whether the multi-millisecond ranging packet includes the synchronization header, so that the two ranging parties can align the format of the multi-millisecond ranging packet, thereby improving ranging efficiency.

With reference to the first aspect or the second aspect, in a possible implementation, the common physical layer configuration field further includes a third field. The third field may indicate a preamble sequence used for the UWB packet in the control phase and/or the report phase. Optionally, if the multi-millisecond ranging packet in the ranging phase includes the synchronization header, the third field may further indicate a preamble sequence used for the synchronization header in the multi-millisecond ranging packet in the ranging phase. It may be understood that the preamble sequence used for the UWB packet in the control phase and/or the report phase herein are/is the same as the preamble sequence used for the synchronization header in the multi-millisecond ranging packet.

For example, when the first field indicates that the narrowband signal that shares the common clock with the UWB is used in the control phase and the UWB packet (the PPDU format of the UWB packet is the STS packet configuration 0) is used in the report phase, the third field indicates a preamble sequence used for the UWB packet in the report phase. When the first field indicates that the UWB packet (the PPDU format of the UWB packet is the STS packet configuration 0) is used in the control phase and the narrowband signal that shares the common clock with the UWB is used in the report phase, the third field indicates a preamble sequence used for the UWB packet in the control phase. Optionally, if the multi-millisecond ranging packet in the ranging phase includes the synchronization header, the third field further indicates a preamble sequence used for the synchronization header in the multi-millisecond ranging packet in the ranging phase. When the first field indicates that the UWB packet (the PPDU format of the UWB packet is the STS packet configuration 0) is used in both the control phase and the report phase, the third field indicates a preamble sequence used for the SP0 packet in the control phase and a preamble sequence used for the SP0 packet in the report phase. Optionally, if the multi-millisecond ranging packet in the ranging phase includes the synchronization header, the third field further indicates a preamble sequence used for the synchronization header in the multi-millisecond ranging packet in the ranging phase.

In this application, it is considered that a sequence used for a ranging sequence fragment in the multi-millisecond ranging packet may not be applied to the SYNC field (because the SYNC field can use only a ternary sequence, but the ranging sequence fragment may use a complementary pair sequence, a ternary sequence, or the like). Therefore, in this application, the third field indicates the preamble sequence used for the UWB packet in the control phase and/or the preamble sequence used for the UWB packet in the report phase, and the preamble sequence used for the synchronization header (if present) in the multi-millisecond ranging packet in the ranging phase. This improves the physical layer configuration, so that the two ranging parties can align physical layer related parameters, thereby supporting completion of the ranging procedure.

With reference to the first aspect or the second aspect, in a possible implementation, the preamble sequence may be a ternary sequence (that is, Ipatov) with a length of 31, 91, or 127. For example, a length of the third field may be 5 bits. When a value of the third field (5 bits) ranges from 0 to 7, it indicates eight ternary sequences with a length of 31, respectively. When a value of the third field (5 bits) ranges from 8 to 23, it indicates 16 ternary sequences with a length of 127, respectively. When a value of the third field (5 bits) ranges from 24 to 31, it indicates eight ternary sequences with a length of 91, respectively.

With reference to the first aspect or the second aspect, in a possible implementation, the UWB packet meets one or more of the following conditions: a data rate is 1.95 Mbps, a SYNC field includes 64 preamble symbols, an SFD sequence is [-1 -1 -1 +1 -1 -1 +1 -1], or a length of an SFD field is 8.

With reference to the first aspect or the second aspect, in a possible implementation, a same wireless technology is used in the control phase and the report phase. In this case, the length of the first field may be 1 bit. For details, refer to the following descriptions in the embodiments. Details are not described herein.

With reference to the first aspect or the second aspect, in a possible implementation, the common physical layer configuration field is included in any one of the following messages: a start of ranging (start of ranging, SOR) message in the initialization and setup phase, a response message in the initialization and setup phase, a poll message in the control phase, a response message in the control phase, or a message in the report phase. For example, the response message in the initialization and setup phase includes an advertising response compact frame and a public advertising response compact frame. The SOR message in the initialization and setup phase includes a start of ranging compact frame and a public start of ranging compact frame. The poll message in the control phase includes a one-to-one poll compact frame and a one-to-many poll compact frame. The response message in the control phase includes a response compact frame and a one-to-many response compact frame. The message in the report phase includes a one-to-one responder report compact frame, a one-to-one responder secure report compact frame, a one-to-many responder report compact frame, and a one-to-many responder secure report compact frame.

In this application, the common physical layer configuration field is carried in an existing message, to complete the physical layer configuration for UWB ranging.

With reference to the first aspect or the second aspect, in a possible implementation, when the common physical layer configuration field is included in the start of ranging (start of ranging, SOR) message in the initialization and setup phase, content indicated by the common physical layer configuration field is used in one or more ranging cycles after the initialization and setup phase. When the common physical layer configuration field is included in the response (response, Resp) message in the initialization and setup phase, content indicated by the common physical layer configuration field is a suggested parameter from the responder (responder) for one or more ranging cycles after the initialization and setup phase.

With reference to the first aspect or the second aspect, in a possible implementation, when the common physical layer configuration field is included in the poll message in the control phase, there are four cases: (1) Content indicated by the first field is not used, and content indicated by the second field (if present) and content indicated by the third field (if present) are used in a ranging cycle in which the common physical layer configuration field is located. (2) Content indicated by the first field is used in a next ranging cycle of a ranging cycle in which the common physical layer configuration field is located, and content indicated by the second field and content indicated by the third field are used in the ranging cycle in which the common physical layer configuration field is located. (3) Content indicated by the common physical layer configuration field is not used. (4) Content indicated by the first field is a suggested parameter for a next ranging cycle of a ranging cycle in which the common physical layer configuration field is located, and neither content indicated by the second field (if present) nor content indicated by the third field (if present) is used.

With reference to the first aspect or the second aspect, in a possible implementation, when the common physical layer configuration field is included in the response message in the control phase or the message in the report phase, there are also four cases: (a) Content indicated by the first field is not used, and content indicated by the second field (if present) and content indicated by the third field (if present) are suggested parameters for a next ranging cycle of a ranging cycle in which the common physical layer configuration field is located. (b) Content indicated by the common physical layer configuration field is a suggested parameter for a next ranging cycle of a ranging cycle in which the common physical layer configuration field is located. (c) Content indicated by the common physical layer configuration field is not used. (d) Content indicated by the first field is a suggested parameter for a next ranging cycle of a ranging cycle in which the common physical layer configuration field is located, and neither content indicated by the second field (if present) nor content indicated by the third field (if present) is used.

In this application, usable time of the content respectively indicated by the first field, the second field, and the third field is designed based on different phases in which the common physical layer configuration field is present, to implement flexible parameter configuration.

According to a third aspect, this application provides a communication apparatus. The communication apparatus is configured to perform the method according to any one of the first aspect or the possible implementations of the first aspect. The communication apparatus includes a unit for performing the method according to any one of the first aspect or the possible implementations of the first aspect.

According to a fourth aspect, this application provides a communication apparatus. The communication apparatus is configured to perform the method according to any one of the second aspect or the possible implementations of the second aspect. The communication apparatus includes a unit for performing the method according to any one of the second aspect or the possible implementations of the second aspect.

According to the third aspect or the fourth aspect, the communication apparatus may include a transceiver module and a processing module. For specific descriptions of the transceiver module and the processing module, refer to the apparatus embodiments shown below. For beneficial effects of the third aspect and the fourth aspect, refer to the related descriptions of the first aspect and the second aspect. Details are not described herein.

According to a fifth aspect, this application provides a physical layer configuration method for UWB ranging. The method may be applied to an initiator or a responder. The method includes: A first communication apparatus generates and sends a physical layer configuration field, where the common physical layer configuration field includes a second field, and the second field indicates whether a multi-millisecond ranging packet in a ranging phase includes a synchronization header. The synchronization header includes a SYNC field and an SFD field. A PPDU format of the multi-millisecond ranging packet is a PPDU configuration 0 (as shown in FIG. 4 below).

In this case, a combination of wireless technologies used in an initialization and setup phase, a control phase, the ranging phase, and a report phase is as follows: A narrowband signal that does not share a common clock with UWB is used in the initialization and setup phase; a UWB packet is used in the control phase; the multi-millisecond ranging packet is used in the ranging phase; and a UWB packet is used in the report phase. A PPDU format of the UWB packet is an STS packet configuration 0. In other words, the UWB packet includes a SYNC field, an SFD field, a PHR field, and a PHY payload field, but does not include an STS.

For example, the first communication apparatus may be the initiator or the responder.

In this application, when a combination of wireless technologies is used, the second field indicates whether the multi-millisecond ranging packet includes the synchronization header. This can improve a physical layer configuration in the ranging session, so that the two ranging parties can align the format of the multi-millisecond ranging packet, thereby supporting completion of the ranging procedure, and improving ranging efficiency and reliability.

According to a sixth aspect, this application provides a physical layer configuration method for UWB ranging. The method may be applied to an initiator or a responder. The method includes: A second communication apparatus receives and processes a physical layer configuration field, where the common physical layer configuration field includes a second field, and the second field indicates whether a multi-millisecond ranging packet in a ranging phase includes a synchronization header. The synchronization header includes a SYNC field and an SFD field. A PPDU format of the multi-millisecond ranging packet is a PPDU configuration 0 (as shown in FIG. 4 below).

In this case, a combination of wireless technologies used in an initialization and setup phase, a control phase, the ranging phase, and a report phase is as follows: A narrowband signal that does not share a common clock with UWB is used in the initialization and setup phase; a UWB packet is used in the control phase; the multi-millisecond ranging packet is used in the ranging phase; and a UWB packet is used in the report phase. A PPDU format of the UWB packet is an STS packet configuration 0. In other words, the UWB packet includes a SYNC field, an SFD field, a PHR field, and a PHY payload field, but does not include an STS.

For example, the second communication apparatus may be the initiator or the responder. It may be understood that when the first communication apparatus is the initiator, the second communication apparatus is the responder. When the first communication apparatus is the responder, the second communication apparatus is the initiator.

With reference to the fifth aspect or the sixth aspect, in a possible implementation, the common physical layer configuration field further includes a third field. The third field may indicate a preamble sequence used for the UWB packet in the control phase and a preamble sequence used for the UWB packet in the report phase, and/or a preamble sequence used for the synchronization header in the multi-millisecond ranging packet in the ranging phase. It may be understood that, if the multi-millisecond ranging packet in the ranging phase includes the synchronization header, the third field may indicate a preamble sequence used for the UWB packet in the control phase and a preamble sequence used for the UWB packet in the report phase, and a preamble sequence used for the synchronization header in the multi-millisecond ranging packet in the ranging phase. If the multi-millisecond ranging packet in the ranging phase does not include the synchronization header, the third field may indicate a preamble sequence used for the UWB packet in the control phase and a preamble sequence used for the UWB packet in the report phase.

In this application, the third field indicates the preamble sequence used for the UWB packet in the control phase and the preamble sequence used for the UWB packet in the report phase, and the preamble sequence used for the synchronization header (if present) in the multi-millisecond ranging packet in the ranging phase. This improves physical layer configuration, so that the two ranging parties can align physical layer-related parameters, thereby supporting completion of the ranging procedure.

With reference to the fifth aspect or the sixth aspect, in a possible implementation, the preamble sequence may be a ternary sequence (that is, Ipatov) with a length of 31, 91, or 127. For example, a length of the third field may be 5 bits. When a value of the third field (5 bits) ranges from 0 to 7, it indicates eight ternary sequences with a length of 31, respectively. When a value of the third field (5 bits) ranges from 8 to 23, it indicates 16 ternary sequences with a length of 127, respectively. When a value of the third field (5 bits) ranges from 24 to 31, it indicates eight ternary sequences with a length of 91, respectively.

With reference to the fifth aspect or the sixth aspect, in a possible implementation, the UWB packet meets one or more of the following conditions: a data rate is 1.95 Mbps, a SYNC field includes 64 preamble symbols, an SFD sequence is [-1 -1 -1 +1 -1 -1 +1 -1], or a length of an SFD field is 8.

With reference to the fifth aspect or the sixth aspect, in a possible implementation, the common physical layer configuration field is included in any one of the following messages: an SOR message in the initialization and setup phase, a response message in the initialization and setup phase, a poll message in the control phase, a response message in the control phase, or a message in the report phase.

With reference to the fifth aspect or the sixth aspect, in a possible implementation, when the common physical layer configuration field is included in the SOR message in the initialization and setup phase, content indicated by the common physical layer configuration field is used in one or more ranging cycles after the initialization and setup phase. When the common physical layer configuration field is included in the response message in the initialization and setup phase, content indicated by the common physical layer configuration field is a suggested parameter from the responder (responder) for one or more ranging cycles after the initialization and setup phase.

With reference to the fifth aspect or the sixth aspect, in a possible implementation, when the common physical layer configuration field is included in the poll message in the control phase, content indicated by the common physical layer configuration field is not used; or content indicated by the common physical layer configuration field is used in a ranging cycle in which the common physical layer configuration field is located.

With reference to the fifth aspect or the sixth aspect, in a possible implementation, when the common physical layer configuration field is included in the response message in the control phase or the message in the report phase, content indicated by the common physical layer configuration field is not used; or content indicated by the common physical layer configuration field is a suggested parameter for a next ranging cycle of a ranging cycle in which the common physical layer configuration field is located.

According to a seventh aspect, this application provides a communication apparatus. The communication apparatus is configured to perform the method according to any one of the fifth aspect or the possible implementations of the fifth aspect. The communication apparatus includes a unit for performing the method according to any one of the fifth aspect or the possible implementations of the fifth aspect.

According to an eighth aspect, this application provides a communication apparatus. The communication apparatus is configured to perform the method according to any one of the sixth aspect or the possible implementations of the sixth aspect. The communication apparatus includes a unit for performing the method according to any one of the sixth aspect or the possible implementations of the sixth aspect.

According to the seventh aspect or the eighth aspect, the communication apparatus may include a transceiver module and a processing module. For specific descriptions of the transceiver module and the processing module, refer to the apparatus embodiments shown below. For beneficial effects of the seventh aspect and the eighth aspect, refer to the related descriptions of the fifth aspect and the sixth aspect. Details are not described herein again.

According to a ninth aspect, this application provides a physical layer configuration method for UWB ranging. The method may be applied to an initiator or a responder. The method includes: A first communication apparatus generates and sends a first frame, where the first frame includes a physical layer management field, and the physical layer management field includes a control phase configuration field and a report phase configuration field. The control phase configuration field and the report phase configuration field may jointly indicate a combination of wireless technologies used in a ranging session. It may be understood that the ranging session includes an initialization and setup phase, a control phase, and a ranging phase, and optionally further include a report phase. Although the report phase is an optional phase of the ranging session (or a ranging cycle), the report phase may still be taken into account when the combination of the wireless technologies used in the ranging session is considered. Therefore, the control phase configuration field and the report phase configuration field may jointly indicate the combination of the wireless technologies used in the initialization and setup phase, the control phase, the ranging phase, and the report phase.

A multi-millisecond ranging packet used in the ranging phase does not include a synchronization header, and a narrowband signal that shares a common clock with UWB is used in the control phase or a first UWB packet is used in the control phase. A PPDU format of the first UWB packet includes only a synchronization header. Alternatively, the first UWB packet may include two UWB packets, where a PPDU format of one UWB packet includes only the synchronization header, and a PPDU format of the other UWB packet is an STS packet configuration 0. In addition, the UWB packet whose PPDU format is the STS packet configuration 0 is transmitted before the UWB packet that includes only the synchronization header.

For example, the first communication apparatus may be the initiator or the responder.

In this application, when a SYNC field and an SFD field are optional parts of the control phase, a PPDU format is defined to include only a synchronization header, and it is constrained that the multi-millisecond ranging packet in the ranging phase does not include the synchronization header. Then, the physical layer management field indicates the combination of the wireless technologies used in the multiple phases in the ranging session. This can improve a physical layer configuration in the ranging session, so that the two ranging parties can align the wireless technologies in the multiple phases in the ranging session, thereby supporting completion of the ranging procedure, and improving ranging efficiency and reliability.

According to a tenth aspect, this application provides a physical layer configuration method for UWB ranging. The method may be applied to an initiator or a responder. The method includes: A second communication apparatus receives and processes a first frame, where the first frame includes a physical layer management field, and the physical layer management field includes a control phase configuration field and a report phase configuration field. The control phase configuration field and the report phase configuration field may jointly indicate a combination of wireless technologies used in a ranging session. A multi-millisecond ranging packet used in the ranging phase does not include a synchronization header, and a narrowband signal that shares a common clock with UWB is used in the control phase or a first UWB packet is used in the control phase. A PPDU format of the first UWB packet includes only a synchronization header. Alternatively, the first UWB packet may include two UWB packets, where a PPDU format of one UWB packet includes only the synchronization header, and a PPDU format of the other UWB packet is an STS packet configuration 0. In addition, the UWB packet whose PPDU format is the STS packet configuration 0 is transmitted before the UWB packet that includes only the synchronization header.

For example, the second communication apparatus may be the initiator or the responder. It may be understood that when the first communication apparatus is the initiator, the second communication apparatus is the responder. When the first communication apparatus is the responder, the second communication apparatus is the initiator.

With reference to the ninth aspect or the tenth aspect, in a possible implementation, the combination of the wireless technologies used in the ranging session further includes: a narrowband signal that does not share a common clock with UWB or a narrowband signal that shares a common clock with UWB is used in the initialization and setup phase; and a narrowband signal that shares a common clock with UWB is used in the report phase or a second UWB packet is used in the report phase.

For example, a PPDU format of the second UWB packet is an STS packet configuration 0. The second UWB packet meets one or more of the following conditions: a data rate is 1.95 Mbps, a SYNC field includes 64 preamble symbols, an SFD sequence is [-1 -1 -1 +1 -1 -1 +1 -1], or a length of an SFD field is 8.

With reference to the ninth aspect or the tenth aspect, in a possible implementation, when a value of the control phase configuration field is 14, it indicates that the control phase includes only a UWB SYNC field and a UWB SFD field; or when a value of the control phase configuration field is 15, it indicates that a UWB packet exists before a UWB SYNC field and a UWB SFD field in the control phase. When a value of the report phase configuration field is 15, it indicates that the UWB packet is used for reporting. When a value of the control phase configuration field is 14 or 15, or a value of the report phase configuration field is 15, the first frame further includes a third field. The third field may indicate a preamble sequence used for the first UWB packet in the control phase and/or a preamble sequence used for the second UWB packet in the report phase.

For example, when a value of the control phase configuration field is any value from 1 to 9, and a value of the report phase configuration field is 15, the third field indicates a preamble sequence used for the second UWB packet in the report phase. When a value of the control phase configuration field is 14 or 15, and a value of the report phase configuration field is any value from 1 to 9, the third field indicates a preamble sequence used for the first UWB packet in the control phase. When a value of the control phase configuration field is 14 or 15, and a value of the report phase configuration field is 15, the third field indicates a preamble sequence used for the first UWB packet in the control phase and a preamble sequence used for the second UWB packet in the report phase. It may be understood that a same preamble sequence is used in both the first UWB packet and the second UWB packet herein.

With reference to the ninth aspect or the tenth aspect, in a possible implementation, the preamble sequence may be a ternary sequence (that is, Ipatov) with a length of 31, 91, or 127. For example, a length of the third field may be 5 bits. When a value of the third field (5 bits) ranges from 0 to 7, it indicates eight ternary sequences with a length of 31, respectively. When a value of the third field (5 bits) ranges from 8 to 23, it indicates 16 ternary sequences with a length of 127, respectively. When a value of the third field (5 bits) ranges from 24 to 31, it indicates eight ternary sequences with a length of 91, respectively.

With reference to the ninth aspect or the tenth aspect, in a possible implementation, the first frame is any one of the following messages: an SOR message in the initialization and setup phase, a response message in the initialization and setup phase, a poll message in the control phase, a response message in the control phase, or a message in the report phase.

With reference to the ninth aspect or the tenth aspect, in a possible implementation, when the first frame is the SOR message in the initialization and setup phase, content indicated by the physical layer management field and/or content indicated by the third field are/is used in one or more ranging cycles after the initialization and setup phase. When the first frame is the response message in the initialization and setup phase, content indicated by the physical layer management field and/or content indicated by the third field are/is suggested parameters/a suggested parameter from the responder (responder) for one or more ranging cycles after the initialization and setup phase.

With reference to the ninth aspect or the tenth aspect, in a possible implementation, when the first frame is the poll message in the control phase, there are four cases: (1) Content indicated by the physical layer management field is not used, and content indicated by the third field is used in a ranging cycle in which the first frame is located. (2) Content indicated by the physical layer management field is used in a next ranging cycle of a ranging cycle in which the first frame is located, and content indicated by the third field is used in the ranging cycle in which the first frame is located. (3) Neither content indicated by the physical layer management field nor content indicated by the third field is used. (4) Content indicated by the physical layer management field is a suggested parameter for a next ranging cycle of a ranging cycle in which the first frame is located, and content indicated by the third field is not used.

With reference to the ninth aspect or the tenth aspect, in a possible implementation, when the first frame is the response message in the control phase or the message in the report phase, there are also four cases: (a) Content indicated by the physical layer management field is not used, and content indicated by the third field is a suggested parameter for a next ranging cycle of a ranging cycle in which the first frame is located. (b) Content indicated by the physical layer management field and content indicated by the third field are suggested parameters for a next ranging cycle of a ranging cycle in which the first frame is located. (c) Neither content indicated by the physical layer management field nor content indicated by the third field is used. (d) Content indicated by the physical layer management field is a suggested parameter for a next ranging cycle of a ranging cycle in which the first frame is located, and content indicated by the third field is not used.

According to an eleventh aspect, this application provides a communication apparatus. The communication apparatus is configured to perform the method according to any one of the ninth aspect or the possible implementations of the ninth aspect. The communication apparatus includes a unit for performing the method according to any one of the ninth aspect or the possible implementations of the ninth aspect.

According to a twelfth aspect, this application provides a communication apparatus. The communication apparatus is configured to perform the method according to any one of the tenth aspect or the possible implementations of the tenth aspect. The communication apparatus includes a unit for performing the method according to any one of the tenth aspect or the possible implementations of the tenth aspect.

According to the eleventh aspect or the twelfth aspect, the communication apparatus may include a transceiver module and a processing module. For specific descriptions of the transceiver module and the processing module, refer to the apparatus embodiments shown below. For beneficial effects of the eleventh aspect and the twelfth aspect, refer to the related descriptions of the ninth aspect and the tenth aspect. Details are not provided herein.

According to a thirteenth aspect, this application provides a communication apparatus. The communication apparatus includes a processor, configured to perform the method according to any one of the first aspect, the second aspect, the fifth aspect, the sixth aspect, the ninth aspect, the tenth aspect, or the possible implementations of any one of the aspects. Alternatively, the processor is configured to execute a program stored in a memory, and when the program is executed, the method according to any one of the first aspect, the second aspect, the fifth aspect, the sixth aspect, the ninth aspect, the tenth aspect, or the possible implementations of any one of the aspects is performed.

With reference to the thirteenth aspect, in a possible implementation, the memory is located outside the communication apparatus.

With reference to the thirteenth aspect, in a possible implementation, the memory is located in the communication apparatus.

In this application, the processor and the memory may alternatively be integrated into one component. In other words, the processor and the memory may alternatively be integrated together.

With reference to the thirteenth aspect, in a possible implementation, the communication apparatus further includes a transceiver, and the transceiver is configured to send or receive a common physical layer configuration field/a first frame.

According to a fourteenth aspect, this application provides a communication apparatus. The communication apparatus includes a logic circuit and an interface, and the logic circuit is coupled to the interface. The interface is configured to exchange (or receive/send or input/output) information or data. The logic circuit is configured to run program instructions, so that the communication apparatus performs the method described in any one of the first aspect, the second aspect, the fifth aspect, the sixth aspect, the ninth aspect, the tenth aspect, or the possible implementations of any one of the aspects. The interface may be a communication interface or a transceiver. The transceiver may be a radio frequency module, a combination of a radio frequency module and an antenna, or an input/output interface of a chip or a circuit in the communication apparatus.

According to a fifteenth aspect, this application provides a readable storage medium. The readable storage medium stores program instructions. When the program instructions are run on a computer, the computer is enabled to perform the method described in any one of the first aspect, the second aspect, the fifth aspect, the sixth aspect, the ninth aspect, the tenth aspect, or the possible implementations of any one of the aspects.

According to a sixteenth aspect, this application provides a computer program product including program instructions. When the computer program product runs, the method described in any one of the first aspect, the second aspect, the fifth aspect, the sixth aspect, the ninth aspect, the tenth aspect, or the possible implementations of any one of the aspects is performed.

According to a seventeenth aspect, this application provides a communication system. The communication system includes a first communication apparatus and a second communication apparatus. The first communication apparatus is configured to perform the method according to any one of the first aspect, the fifth aspect, ninth aspect, or the possible implementations of the aspects, and the second communication apparatus is configured to perform the method according to any one of the second aspect, the sixth aspect, tenth aspect, or the possible implementations of the aspects.

For technical effects achieved in the foregoing aspects, refer to each other or refer to beneficial effect in the method embodiment described below. Details are not repeated herein.

### BRIEF DESCRIPTION OF DRAWINGS

FIG. 1 is a diagram of a structure of a wireless communication system according to an embodiment of this application;
FIG. 2 is a diagram of another structure of a wireless communication system according to an embodiment of this application;
FIG. 3 is a diagram of fragmented transmission of a UWB signal according to an embodiment of this application;
FIG. 4 is a possible diagram of a PPDU format according to an embodiment of this application;
FIG. 5 is a diagram of a ranging session process according to an embodiment of this application;
FIG. 6 is a diagram of signal transmission in multi-millisecond ranging according to an embodiment of this application;
FIG. 7 is a diagram of a format of a physical layer management field according to an embodiment of this application;
FIG. 8 is a schematic flowchart of a physical layer configuration method for UWB ranging according to an embodiment of this application;
FIG. 9 is a diagram of a format of a common physical layer configuration field according to an embodiment of this application;
FIG. 10 is another schematic flowchart of a physical layer configuration method for UWB ranging according to an embodiment of this application;
FIG. 11 is a diagram of a format of a preamble code field according to an embodiment of this application;
FIG. 12 is a diagram of a PPDU format according to an embodiment of this application;
FIG. 13 is still another schematic flowchart of a physical layer configuration method for UWB ranging according to an embodiment of this application;
FIG. 14 is a diagram of a format of a ranging physical layer configuration field according to an embodiment of this application;
FIG. 15 is a diagram of a structure of a communication apparatus according to an embodiment of this application;
FIG. 16 is a diagram of another structure of a communication apparatus according to an embodiment of this application; and
FIG. 17 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, words such as "first" and "second" are merely used to distinguish between different objects, and do not limit numbers and execution sequences. In addition, the words such as "first" and "second" do not indicate a definite difference. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In descriptions of this application, "at least one (item) "means one or more, "multiple" means two or more, and "at least two (items)" means two, three, or more. In addition, "or" is used for describing an association relationship between associated objects, and represents that three relationships may exist. For example, "A or B" may represent the following three cases: Only A exists, only B exists, and both A and B exist, where A and B may be singular or plural. The character "/" usually indicates an "or" relationship between the associated objects. "One or more of the following items (pieces)" or a similar expression thereof means any combination of these items. For example, one or more of the following items (pieces): a, b, or c, may represent: a, b, c, "a and b", "a and c", "b and c", or "a, b, and c".

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

In descriptions of this application, both "when", "in a case of", and "if" mean that an apparatus performs corresponding processing in an objective situation, are not intended to limit time, do not require the apparatus to necessarily have a determining action during implementation, and do not mean another limitation.

In this application, unless otherwise specified, an element indicated in a singular form is intended to indicate "one or more", but does not indicate "one and only one".

In embodiments of this application, "B corresponding to A", "A corresponds to B", or a similar expression indicates that B is associated with A and B may be determined based on A. Determining B based on A does not mean that B is determined based only on A. B may alternatively be determined based on A and/or other information.

In this application, "indication" may include a direct indication, an indirect indication, an explicit indication, and an implicit indication. When a piece of information is described as indicating A, it may be understood that the information carries A, directly indicates A, or indirectly indicates A.

In this application, information indicated by XX information is referred to as to-be-indicated information. In a specific implementation process, there are manners of indicating the to-be-indicated information. For example, the manners include but are not limited to a manner in which the to-be-indicated information, for example, the to-be-indicated information itself or an index, an identifier, or the like of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of multiple pieces of information that is pre-agreed on (for example, stipulated in a protocol), to reduce indication overheads to some extent. In addition, the to-be-indicated information may be sent as a whole, or may be divided into multiple pieces of sub-information for separate sending. In addition, sending periodicities and/or sending occasions of the sub-information may be the same or may be different.

In this application, "sending" and "receiving" indicate signal transmission directions. For example, "sending information to A" may be understood as a destination end of the information being A, and may include direct sending through an air interface, or indirect sending by another unit or module through an air interface. "Receiving information from B" may be understood as a source end of the information being B, and may include direct receiving through an air interface from B, or may include indirect receiving by another unit or module through an air interface from B. "Sending" may also be understood as "outputting" of a chip interface, and "receiving" may also be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

The technical solutions provided in this application may be applied to a wireless personal area network (wireless personal area network, WPAN) based on a UWB technology. For example, a method provided in this application may be applied to IEEE 802.15 series protocols, for example, an 802.15.4a protocol, an 802.15.4z protocol, or an 802.15.4ab protocol, or a future generation UWB WPAN standard. Examples are not enumerated herein. The method provided in this application may be further applied to various communication systems, such as an internet of things (internet of things, IoT) system, vehicle-to-everything (vehicle to X, V2X), and a narrowband internet of things (narrowband internet of things, NB-IoT) system, or may be applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, an LTE system, a 5th-generation (5th-generation, 5G) communication system, a 6th-generation (6th-generation, 6G) communication system, and the like.

The UWB technology is a new wireless communication technology that can perform data transmission by using nanosecond-level non-sinusoidal wave narrow pulses, perform modulation on an impulse pulse with very steep rise and fall time, and therefore, occupies a very wide spectrum range for transmission, so that a signal has a bandwidth of a Giga Hertz (GHz) magnitude. Bandwidths used by UWB are usually higher than 500 MHz. A UWB system does not need to generate a sinusoidal carrier signal and may directly transmit an impulse sequence. Therefore, the UWB system has a wide spectrum and low average power. The UWB wireless communication system has advantages of a strong multipath resolution capability, low power consumption, high confidentiality, and the like. This facilitates coexistence with other systems, and improves spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between ultra-wideband and narrowband communication. Therefore, the UWB system and a narrowband (narrowband, NB) communication system can operate at the same time without interfering with each other. The method provided in this application may be implemented by a communication apparatus in the wireless communication system. In a communication apparatus, an apparatus or a chip that implements functions of the UWB system may be referred to as a UWB module, and an apparatus or a chip that implements functions of the narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. The communication apparatus in this application includes the UWB module and/or the narrowband communication module.

Although embodiments of this application are mainly described by using a WPAN as an example, for example, a network used in IEEE 802.15 series standards is used as an example for description. A person skilled in the art easily understands that, various aspects in this application may be extended to another network using various standards or protocols, for example, a wireless local area network (wireless local area network, WLAN), Bluetooth (BLUETOOTH), a high performance radio LAN (high performance radio LAN, HIPERLAN) (a wireless standard similar to the IEEE 802.11 standard, mainly used in Europe), a wide area network (WAN), or another network known now or developed in the future. Therefore, regardless of used coverage and a used wireless access protocol, various aspects provided in this application are applicable to any appropriate wireless network.

Optionally, the communication apparatus in embodiments of this application may be a device that supports multiple WPAN standards, such as 802.15.4a, 802.15.4z, 802.15.4ab under discussion, or a subsequent release.

For example, the method provided in this application may be implemented by a communication apparatus in a wireless communication system, and the communication apparatus may be an apparatus in a UWB system. For example, the communication apparatus may include but is not limited to a communication server, a router, a switch, a bridge, a computer, a mobile phone, or the like that supports a UWB technology and/or a narrowband communication technology. For another example, the communication apparatus may include user equipment (user equipment, UE). The user equipment may include various devices that support the UWB technology, such as handheld devices, vehicle-mounted devices (for example, vehicles or components mounted on vehicles), wearable devices, internet of things (internet of things, IoT) devices, compute devices, or other processing devices connected to wireless modems. Examples are not enumerated herein. For another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home, or the like. For another example, the communication apparatus may include a chip, and the chip may be disposed in a communication server, a router, a switch, a terminal device, or the like. Examples are not enumerated herein.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

It may be understood that the foregoing descriptions of the communication apparatus are applicable to any communication apparatus in embodiments of this application.

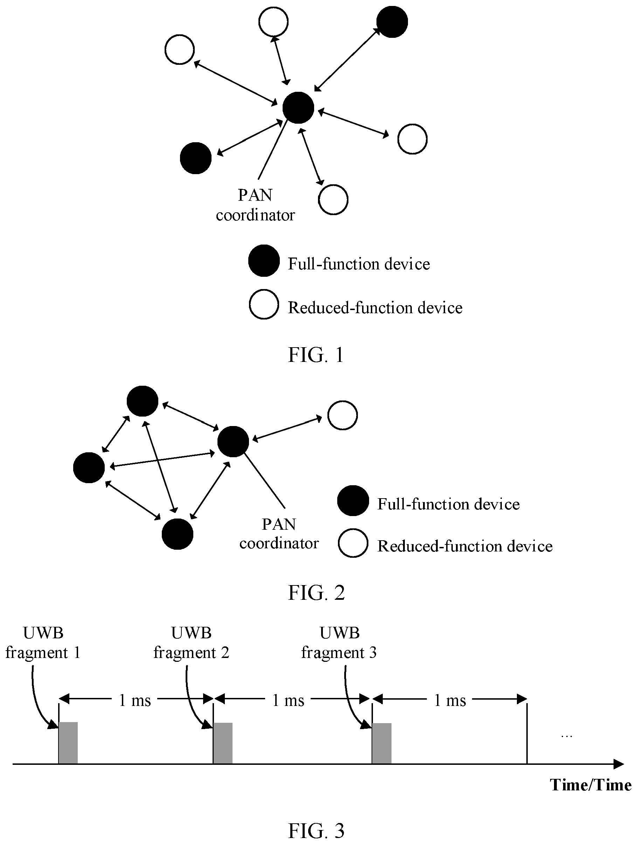

For example, FIG. 1 is a diagram of a structure of a wireless communication system according to an embodiment of this application. As shown in FIG. 1, the wireless communication system is a star topology structure. In this structure, one central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a point-to-point topology structure. In this structure, a central control node (for example, a PAN coordinator in FIG. 2) may perform data communication with one or more other devices, and other different devices may also perform data communication with each other. In FIG. 1 and FIG. 2, both a full-function device (full-function device) and a reduced-function device (reduced-function device) may be understood as communication apparatuses shown in this application. The full-function device is relative to the reduced-function device. For example, the reduced-function device cannot be a PAN coordinator (coordinator). For another example, compared with the full-function device, the reduced-function device may have no coordination capability or have a lower communication rate than the full-function device. It may be understood that the PAN coordinator shown in FIG. 2 is merely an example, and the other three full-function devices shown in FIG. 2| may alternatively serve as PAN coordinators. Examples are not enumerated herein. It can be further understood that the full-function device and the reduced-function device in this application are merely examples of communication apparatuses, and any apparatus that can implement a ranging method provided in this application falls within the protection scope of this application.

The following briefly describes some related content, terms, or nouns in this application.

### 1. Fragmented transmission of a UWB signal

Because a bandwidth of an ultra-wideband system is very large, to reduce interference to other devices during operation of the ultra-wideband system, the Federal Communications Commission (FCC) imposes a strict limitation on power spectral density of UWB signals. According to the Code of Federal Regulations (Code of Federal Regulations, CFR), there are mainly the following two rules:

Rule 1: An average value of maximum power spectral density (power spectral density, PSD) of a transmitted UWB signal within 1 millisecond cannot be greater than -41.3 dBm per megahertz.

Rule 2: Maximum power of the transmitted UWB signal within any bandwidth of 50 MHz cannot exceed 1 milliwatt.

Rule 1 limits total transmit energy of the UWB signal within 1 millisecond (not exceeding 37 nJ in a bandwidth of 500 MHz). However, instantaneous power of the transmitted signal can be increased by concentrating the energy for transmission within a shorter time, thereby increasing a coverage area of the UWB signal and improving a signal-to-noise ratio (signal-to-noise ratio, SNR) of a signal received by a receiver. Based on this, in some scenarios in which transmit power needs to be increased, a UWB signal transmission method is shown in FIG. 3. FIG. 3 is a diagram of fragmented transmission of a UWB signal according to an embodiment of this application. As shown in FIG. 3, a transmitter fragments a to-be-transmitted UWB signal into multiple fragments (fragment), where a time length of each UWB fragment (UWB fragment) signal is less than 1 millisecond (ms), and only one UWB fragment is sent in each millisecond.

It may be understood that fragmented transmission can increase instantaneous power of the UWB signal, thereby increasing a coverage area of the UWB signal and increasing a signal-to-noise ratio of a signal received by a receiver. In a ranging scenario, an application of fragmented transmission is multi-millisecond (multi-millisecond, MMS) ranging. For descriptions of multi-millisecond ranging, refer to the following descriptions. Details are not described herein.

### 2. Physical layer protocol data unit (physical layer protocol data unit, PPDU) format in a UWB system

FIG. 4 shows some PPDU formats defined in the 802.15.4a, 802.15.4z, and 802.15.4ab standards. FIG. 4 is a possible diagram of a PPDU format according to an embodiment of this application. FIG. 4 shows five possible PPDU formats (format). During actual application, there are more or fewer PPDU formats than those shown in FIG. 4. This is not limited in this application. It may be understood that a PPDU configuration 4 (config 4) to a PPDU configuration 7 (config 7) are structures used to implement a sensing function, and therefore are not shown in FIG. 4. As shown in FIG. 4, a PPDU configuration 0 (config 0) to a PPDU configuration 3 (config 3) include one or more of the following: a synchronization (synchronization, SYNC) field, a start-of-frame delimiter (start-of-frame delimiter, SFD) field, a physical layer header (physical layer header, PHR) field, a physical layer payload field (PHY payload field), or a scrambled timestamp sequence (scrambled timestamp sequence, STS). A receiver may perform PPDU detection and synchronization based on the synchronization (SYNC) field. The synchronization (SYNC) field may include multiple repeated symbols, and the symbols may be generated based on a preamble sequence. The synchronization field may be further used to implement a ranging function. The PHR field carries some physical layer indication information, such as modulation and coding information or packet length information, to assist the receiver in correctly demodulating data. The physical payload field may be used to carry data. The scrambled timestamp sequence (STS) may also be used to implement the ranging function.

A PPDU configuration 8 (config 8) is a structure of a multi-millisecond UWB frame defined in the 802.15.4ab standard. Each multi-millisecond UWB frame includes multiple UWB fragments (UWB fragment), and the multiple UWB fragments may form one PPDU. A transmission start time interval between adjacent UWB fragments is 1 millisecond (ms). The PPDU structure of the multi-millisecond UWB frame may include a synchronization (SYNC) field, and may further include a scrambled timestamp sequence (STS). The PPDU structure of the multi-millisecond UWB frame does not include a data part.

It may be understood that, in 802.15.4z, the PPDU configuration 0 (config 0) to the PPDU configuration 3 (config 3) shown in FIG. 4 are respectively referred to as STS packet configurations 0 to 3 (STS packet configurations zero to three). To be specific, a format represented by PPDU config 0 in FIG. 4 is the same as a format represented by STS packet configuration zero; a format represented by PPDU config 1 in FIG. 4 is the same as a format represented by STS packet configuration one; a format represented by PPDU config 2 in FIG. 4 is the same as a format represented by STS packet configuration two; and a format represented by PPDU config 3 in FIG. 4 is the same as a format represented by STS packet configuration three. In other words, STS packet configuration zero mentioned in this specification represents the format corresponding to PPDU config 0 in FIG. 4.

### 3. Multi-millisecond ranging

One ranging session process may include but is not limited to: an initialization and setup (initialization and setup) phase and one or more ranging cycles (ranging cycle). One ranging cycle may include a control (control) phase and a ranging (ranging) phase, and optionally further include a report (report) phase. In this application, a ranging cycle (ranging cycle) may also be referred to as a ranging round (ranging round), and the ranging cycle and the ranging round may be used interchangeably.

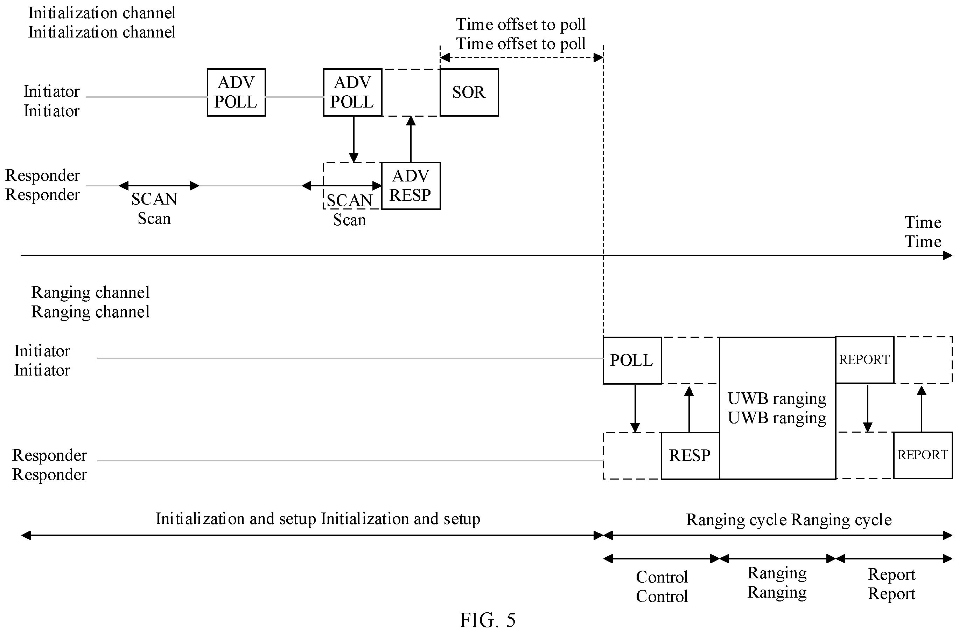

FIG. 5 is a diagram of a ranging session process according to an embodiment of this application. For simplicity, the ranging session process shown in FIG. 5 includes one ranging cycle. As shown in FIG. 5, in an initialization and setup phase, an initiator (initiator) and a responder (responder) exchange information through an initialization channel (initialization channel). For example, the initiator sends an advertising poll (Advertising poll, ADV POLL) message on the initialization channel, and after scanning (scan) the advertising poll message, the responder returns an advertising response (Advertising response, ADV RESP) message on the initialization channel. Then, the initiator sends a start of ranging (start of ranging, SOR) message on the initialization channel. As shown in FIG. 5, in the ranging cycle, an initiator and a responder exchange information through a ranging channel (ranging channel), where the ranging channel may be a narrowband channel or a UWB channel. For example, in a control phase, the initiator and the responder may exchange some parameters related to ranging on the ranging channel via polling (poll) and response (response). In a ranging phase, the initiator and the responder may perform UWB ranging (UWB Ranging) on the ranging channel. In a report phase (if present), the initiator and the responder may exchange reports (report) on the ranging channel.

In a possible implementation, multi-millisecond ranging (multi-millisecond ranging) may be used in the ranging phase. In other words, the UWB ranging in FIG. 5 may be multi-millisecond ranging. The multi-millisecond ranging may be understood as ranging performed in a fragmented transmission manner.

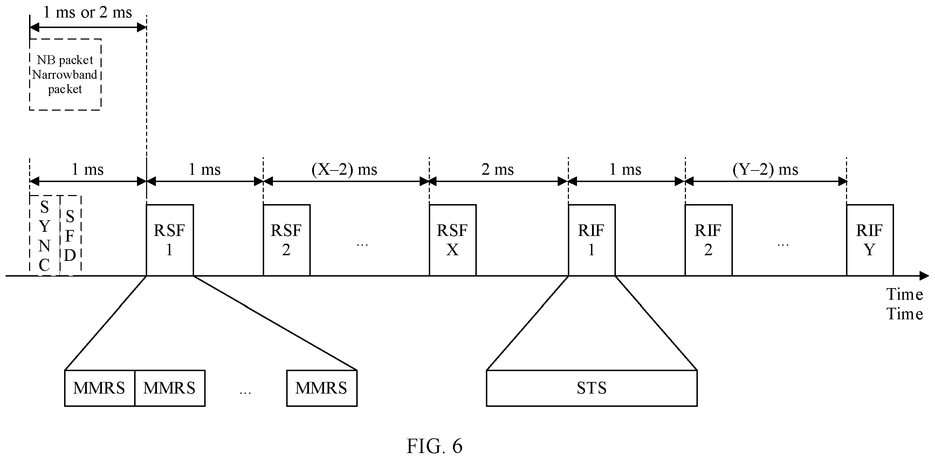

For example, signal transmission in high rate pulse repetition frequency (high rate pulse repetition frequency, HRP) UWB multi-millisecond ranging is shown in FIG. 6. FIG. 6 is a diagram of signal transmission in multi-millisecond ranging according to an embodiment of this application. UWB fragments may be classified into two types: ranging sequence fragments (ranging sequence fragment, RSF) and ranging integrity fragments (ranging integrity fragment, RIF). One UWB multi-millisecond ranging signal may include an RSF or an RIF, or may include both an RSF and an RIF. For example, as shown in FIG. 6, the ranging signal may further include a SYNC field or an SFD field. As shown in FIG. 6, the ranging signal includes X RSFs, lengths of all the RSFs are the same, and a transmission start time interval between two adjacent RSFs is 1 millisecond (ms). Each RSF may include multi-millisecond ranging symbol (Multi-millisecond ranging symbol, MMRS) repetitions (MMRS symbol repetitions, MSR) of multi-millisecond ranging symbols (MMRS). As shown in FIG. 6, the ranging signal further includes Y RIFs, lengths of all the RIFs are the same, and a transmission start time interval between two adjacent RIFs is 1 millisecond (ms). Each RIF may include several STSs. When both an RSF and an RIF exist in one ranging signal, a transmission start time interval between the last RSF and the first RIF is 2 milliseconds. In addition, all the RSFs and RIFs are transmitted on a same UWB channel.

There are three types of signal transmission in the multi-millisecond ranging shown in FIG. 6.
(1) A narrowband packet (NB packet) exists, and the narrowband packet is transmitted before the first RSF (when an RSF exists) or the first RIF (when an RSF does not exist). The narrowband packet shares a common clock with UWB, and is modulated by using offset quadrature phase shift keying (offset-quadrature phase shift keying, O-QPSK), so that initial time-frequency synchronization can be provided for a UWB signal transmitted in fragments, and UWB-related control information can be transmitted and a UWB measurement result can be reported.
(2) No narrowband packet that shares a common clock with UWB exists, and a SYNC field and an SFD field of the UWB exist before the first RSF (when an RSF exists) or the first RIF (when an RSF does not exist). In other words, in the multi-millisecond ranging, the SYNC field and the SFD field, and the RSF and/or the RIF may form one ranging signal. In other words, one ranging signal in the multi-millisecond ranging may include both the SYNC field and the SFD field, and the RSF and/or the RIF. The SYNC field and the SFD field may provide initial time-frequency synchronization for a UWB signal transmitted in fragments.
(3) No narrowband that shares a common clock with UWB exists, and no SYNC field or SFD field exists in the UWB. In this case, time-frequency synchronization of a UWB signal transmitted in fragments may be implemented through a control phase.

In conclusion, the SYNC field and the SFD field in FIG. 6 are optional parts in an MMS (multi-millisecond) ranging packet. Because the MMS ranging packet is content of the ranging phase, the SYNC field and the SFD field may be understood as parts of the ranging phase.

### 4. Physical layer management field

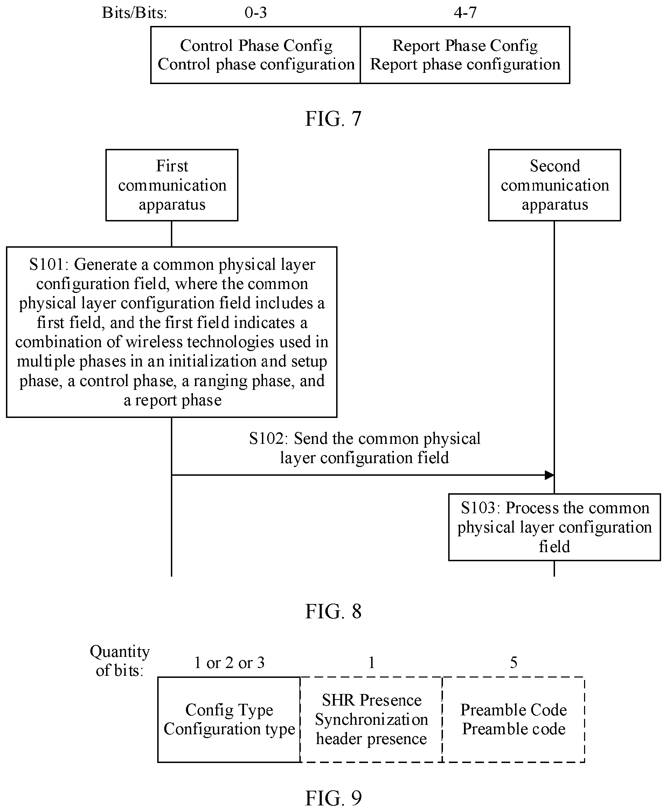

FIG. 7 is a diagram of a format of a physical layer management field according to an embodiment of this application. As shown in FIG. 7, the physical layer management field includes a control phase configuration (Control Phase Config) field and a report phase configuration (Report Phase Config) field. The control phase configuration field may indicate a physical layer configuration in a control phase. A value of the control phase configuration field ranges from 1 to 9, indicating nine configurations (for example, a rate, a SYNC length, an SFD sequence, a PHR length, and a symbol-to-chip mapping) of O-QPSK in the control phase. A value of 14 indicates that the control phase includes only a UWB SYNC field and a UWB SFD field. A value of 15 indicates that a UWB packet exists before a UWB SYNC field and a UWB SFD field in the control phase, where a quantity of preamble symbol repetitions (preamble symbol repetitions, PSR) in a SYNC field of the UWB packet is 64, an SFD index (index) of the UWB packet is 2, a length of the SFD is 8, the UWB packet does not include an STS, and a data rate is 1.95 Mbps. For example, for the configuration of O-QPSK, refer to the conventional technology. Details are not described herein. The report phase configuration field may indicate a physical layer configuration in a report phase. A value of the report phase configuration field ranges from 1 to 9, indicating nine configurations of O-QPSK in the report phase. A value of 15 indicates that a UWB packet is used for reporting, where a PSR in a SYNC field of the UWB packet is 64, an SFD index of the UWB packet is 2, a length of an SFD is 8, the UWB packet does not include an STS, and a data rate is 1.95 Mbps. For example, the SFD index being 2 indicates that an SFD sequence is [-1 -1 -1 +1 -1 -1 +1 -1].

It can be learned from the Control Phase Config field that the UWB SYNC field and the UWB SFD field are parts of the control phase.

A ranging session may include an initialization and setup (initialization and setup) phase, a control (control) phase, and a ranging (ranging) phase, and optionally further include a report (report) phase. Wireless technologies (for example, narrowband and UWB) used in phases of the ranging session may be different. Therefore, how to improve a physical layer configuration in the ranging session is a problem that is being studied by a person skilled in the art.

This application provides a physical layer configuration method for UWB ranging and an apparatus, to improve a physical layer configuration in a ranging session, so that two ranging parties can align physical layer-related parameters, thereby supporting completion of a ranging procedure, and improving ranging efficiency and reliability.

The following describes in detail the technical solutions provided in this application with reference to more accompanying drawings.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application. It may be understood that a sequence of the following embodiments does not represent a degree of importance.

The communication apparatus in this application may not only support the 802.15 series protocols, such as the 802.15.4ab standard or a next-generation standard of 802.15.4ab, but also support other IEEE standard protocols (for example, the 802.11 series protocols), for example, multiple WLAN standards of the 802.11 family, such as 802.11ax, 802.11ac, 802.11n, 802.11g, 802.11b, 802.11a, 802.11be, and 802.11bn (also referred to as Wi-Fi 8 and ultra high reliability (ultra high reliability, UHR)), but may also support sensing protocols such as 802.11bf.

In a possible implementation, the method provided in this application may be applied to a unidirectional/bidirectional ranging scenario between one node and one node, or may be applied to a unidirectional/bidirectional ranging scenario between one node and multiple nodes, or may be further applied to a unidirectional/bidirectional ranging scenario between multiple nodes and multiple nodes. This is not limited in this application.

FIG. 8 is a schematic flowchart of a physical layer configuration method for UWB ranging according to an embodiment of this application. The method mainly describes a physical layer configuration in a ranging session when a SYNC field and an SFD field are optional parts of an MMS ranging packet. A first communication apparatus and a second communication apparatus in the method may be any two devices that can perform data communication in FIG. 1 or FIG. 2. In a possible implementation, the first communication apparatus in the method may be used as an initiator (initiator), and the second communication apparatus may be used as a responder (responder). Certainly, the first communication apparatus may alternatively be used as a responder (responder), and the second communication apparatus may be used as an initiator (initiator). This is not limited in embodiments of this application.

As shown in FIG. 8, the physical layer configuration method for UWB ranging includes but is not limited to the following steps.

S101: The first communication apparatus generates a common physical layer configuration field, where the common physical layer configuration field includes a first field, and the first field indicates a combination of wireless technologies used in multiple phases in an initialization and setup phase, a control phase, a ranging phase, and a report phase.

S102: The first communication apparatus sends the common physical layer configuration field.

Correspondingly, the second communication apparatus receives the common physical layer configuration field.

S103: The second communication apparatus processes the common physical layer configuration field. For example, the second communication apparatus interprets/parses the first field in the common physical layer configuration field, and determines the wireless technologies in the multiple phases in the initialization and setup phase, the control phase, the ranging phase, and the report phase, to subsequently transmit information by using the corresponding wireless technologies based on an indication of the first field.

In a possible implementation, this embodiment of this application may be described based on that a SYNC field and an SFD field that are optional parts of an MMS (multi-millisecond) ranging packet.

In a possible implementation, the combination of the wireless technologies used in the initialization and setup phase, the control phase, the ranging phase, and the report phase may include: a narrowband signal (for example, a narrowband signal that shares a common clock with UWB or a narrowband signal that does not share a common clock with UWB) is used in the initialization and setup phase, a narrowband signal (for example, a narrowband signal that shares a common clock with UWB) or a UWB packet (for example, a PPDU format of the UWB packet is an STS packet configuration 0) is used in the control phase, a UWB packet (for example, a multi-millisecond ranging packet) is used in the ranging phase, and a narrowband signal (for example, a narrowband signal that shares a common clock with UWB) or a UWB packet (for example, a PPDU format of the UWB packet is an STS packet configuration 0) is used in the report phase. For example, a PPDU format of the multi-millisecond ranging packet in this embodiment of this application may be the PPDU configuration 8 (PPDU config 8) shown in FIG. 4. A format represented by the STS packet configuration 0 is the format represented by PPDU config 0 shown in FIG. 4. In other words, that the PPDU format of the UWB packet is the STS packet configuration 0 indicates that the UWB packet includes a SYNC field, an SFD field, a PHY field, and a PHY payload, but does not include an STS. For ease of description, in this embodiment of this application, a UWB packet whose PPDU format is the STS packet configuration 0 is referred to as an "SP0 packet". Details are not described below again.

For clarity, the combination of the wireless technologies used in the initialization and setup phase, the control phase, the ranging phase, and the report phase is illustrated in the following table. As shown in Table 1 below, Table 1 shows combinations of wireless technologies used in the foregoing four phases (namely, the initialization and setup phase, the control phase, the ranging phase, and the report phase).

**Table 1**

| | Initialization and setup phase | Control phase | Ranging phase | Report phase |
|---|---|---|---|---|
| Combination 1 | Narrowband signal that shares a common clock with UWB | Narrowband signal that shares a common clock with UWB | Multi-millisecond ranging packet A | Narrowband signal that shares a common clock with UWB |
| Combination 2 | Narrowband signal that shares a common clock with UWB | Narrowband signal that shares a common clock with UWB | Multi-millisecond ranging packet A | SP0 packet |
| Combination 3 | Narrowband signal that shares a common clock with UWB | SP0 packet | Multi-millisecond ranging packet B | Narrowband signal that shares a common clock with UWB |
| Combination 4 | Narrowband signal that shares a common clock with UWB | SP0 packet | Multi-millisecond ranging packet B | SP0 packet |
| Combination 5 | Narrowband signal that does not share a common clock with UWB | SP0 packet | Multi-millisecond ranging packet B | SP0 packet |
| Combination 6 | Narrowband signal that does not share a common clock with UWB | Narrowband signal that does not share a common clock with UWB | Multi-millisecond ranging packet B | Narrowband signal that does not share a common clock with UWB |

It may be understood that Table 1 is merely an example. During actual application, combinations of wireless technologies used in the initialization and setup phase, the control phase, the ranging phase, and the report phase may be more or less than the combinations shown in Table 1. It may be further understood that the wireless technologies in the phases shown in Table 1 are merely examples. During actual application, wireless technologies used in the phases may be different from those in Table 1.

It can be learned from Table 1 that wireless technologies in the control phase and the report phase may be the same or may be different. If only a same wireless technology can be used in the control phase and the report phase, the combination of the wireless technologies used in the initialization and setup phase, the control phase, the ranging phase, and the report phase includes some content in Table 1, for example, the combination 1, the combination 4, the combination 5, and the combination 6 in Table 1.

In a possible implementation, the narrowband signal that shares the common clock with the UWB may be modulated by using O-QPSK (offset quadrature phase shift keying). Therefore, in some scenarios, "O-QPSK" may indicate "narrowband signal that shares a common clock with UWB". The narrowband signal that does not share the common clock with the UWB may be referred to as "out of band (out of band, OOB)", and indicates a narrowband signal that is not constrained in the UWB protocol.

In a possible implementation, the multi-millisecond ranging packet A in Table 1 may be a multi-millisecond ranging packet that does not carry a synchronization header (synchronization header, SHR). The multi-millisecond ranging packet B in Table 1 represents a multi-millisecond ranging packet that may carry a synchronization header (SHR). The synchronization header (SHR) includes a SYNC field and an SFD field.

In a possible implementation, a data rate of the SP0 packet in Table 1 may be 1.95 Mbps. In the SP0 packet, a synchronization field may include 64 preamble symbols, an SFD sequence may be [-1 -1 -1 +1 -1 -1 +1 - 1], and a length of the SFD field may be 8. Configurations of SP0 packets in a control phase and a report phase of a same ranging cycle (or ranging round) may be the same, and the SP0 packets may be transmitted on a same UWB channel. Herein, "same configuration" may mean that quantities of preamble symbols in synchronization fields are the same, indexes (index) of preamble sequences are the same, and SFD sequences are the same.

In a possible implementation, the first communication apparatus generates and sends the common physical layer configuration field, where the common physical layer configuration field may include the first field. The common physical layer configuration field may alternatively have another name, for example, a physical layer configuration field. This is not limited in embodiments of this application. The first field may indicate the combination of the wireless technologies used in the multiple (that is, at least two) phases in the initialization and setup phase, the control phase, the ranging phase, and the report phase. For example, the first field may indicate any one of the multiple combinations in Table 1.

The second communication apparatus receives and processes the common physical layer configuration field. For example, the second communication apparatus interprets/parses the first field in the common physical layer configuration field, and determines the wireless technologies in the multiple phases in the initialization and setup phase, the control phase, the ranging phase, and the report phase, to subsequently transmit information by using the corresponding wireless technologies based on the indication of the first field.

In a possible implementation, in the combination 6 in Table 1, except for the ranging phase in which the multi-millisecond ranging packet B is used, wireless technologies used in other phases are not constrained in the UWB protocol, and therefore, in this embodiment of this application, a related physical layer configuration may not be designed for the combination 6 in Table 1. For example, the first field may indicate any one of the first five combinations (that is, the combination 1 to the combination 5) in Table 1. Certainly, the first field may alternatively indicate any one of the six combinations in Table 1.

For example, a length of the first field may be 3 bits. When a value of the first field (3 bits) is a first value, it indicates the combination 1, that is, the narrowband signal that shares the common clock with the UWB is used in the initialization and setup phase, the narrowband signal that shares the common clock with the UWB is used in the control phase, the multi-millisecond ranging packet A is used in the ranging phase, and the narrowband signal that shares the common clock with the UWB is used in the report phase. When a value of the first field (3 bits) is a second value, it indicates the combination 2, that is, the narrowband signal that shares the common clock with the UWB is used in the initialization and setup phase, the narrowband signal that shares the common clock with the UWB is used in the control phase, the multi-millisecond ranging packet A is used in the ranging phase, and the SP0 packet is used in the report phase. When a value of the first field (3 bits) is a third value, it indicates the combination 3, that is, the narrowband signal that shares the common clock with the UWB is used in the initialization and setup phase, the SP0 packet is used in the control phase, the multi-millisecond ranging packet B is used in the ranging phase, and the narrowband signal that shares the common clock with the UWB is used in the report phase. When a value of the first field (3 bits) is a fourth value, it indicates the combination 4, that is, the narrowband signal that shares the common clock with the UWB is used in the initialization and setup phase, the SP0 packet is used in the control phase, the multi-millisecond ranging packet B is used in the ranging phase, and the SP0 packet is used in the report phase. When a value of the first field (3 bits) is a fifth value, it indicates the combination 5, that is, the narrowband signal that does not share the common clock with the UWB is used in the initialization and setup phase, the SP0 packet is used in the control phase, the multi-millisecond ranging packet B is used in the ranging phase, and the SP0 packet is used in the report phase. Optionally, when a value of the first field (3 bits) is a sixth value, it indicates the combination 6, that is, the narrowband signal that does not share the common clock with the UWB is used in each of the initialization and setup phase, the control phase, and the report phase, and the multi-millisecond ranging packet B is used in the ranging phase. The first value, the second value, the third value, the fourth value, the fifth value, and the sixth value are different from each other. For example, the first value, the second value, the third value, the fourth value, the fifth value, and the sixth value are 0, 1, 2, 3, 4, and 5, respectively. When a value of the first field (3 bits) is another value (for example, 5, 6, 7, or 6, 7), it indicates reserved.

In a possible implementation, the combination 1 to the combination 5 in Table 1 may be classified into two scenarios: a scenario 1 and a scenario 2. The scenario 1 may indicate that a narrowband signal that shares a common clock with UWB exists. If only a same wireless technology can be used in the control phase and the report phase, the scenario 1 includes the combination 1 and the combination 4. If wireless technologies in the control phase and the report phase may be the same or different, the scenario 1 may include the combination 1, the combination 2, the combination 3, and the combination 4. The scenario 2 may indicate that no narrowband signal that shares a common clock with UWB exists, that is, indicate the combination 5. For the scenario 1, a length of the first field may be 1 bit or 2 bits. For the scenario 2, details are discussed below, and are not described herein.

For example, if the scenario 1 includes the combination 1 and the combination 4, the length of the first field may be 1 bit. For example, when a value of the first field (1 bit) is a first value, it indicates the combination 1, that is, the narrowband signal that shares the common clock with the UWB is used in the initialization and setup phase, the narrowband signal that shares the common clock with the UWB is used in the control phase, the multi-millisecond ranging packet A is used in the ranging phase, and the narrowband signal that shares the common clock with the UWB is used in the report phase. When a value of the first field (1 bit) is a second value, it indicates the combination 4, that is, the narrowband signal that shares the common clock with the UWB is used in the initialization and setup phase, the SP0 packet is used in the control phase, the multi-millisecond ranging packet B is used in the ranging phase, and the SP0 packet is used in the report phase. The first value is different from the second value. For example, the first value and the second value are 0 and 1, respectively.

For example, if the scenario 1 includes the combination 1, the combination 2, the combination 3, and the combination 4, the length of the first field may be 2 bits. For example, when a value of the first field (2 bits) is a first value, it indicates the combination 1, that is, the narrowband signal that shares the common clock with the UWB is used in the initialization and setup phase, the narrowband signal that shares the common clock with the UWB is used in the control phase, the multi-millisecond ranging packet A is used in the ranging phase, and the narrowband signal that shares the common clock with the UWB is used in the report phase. When a value of the first field (2 bits) is a second value, it indicates the combination 2, that is, the narrowband signal that shares the common clock with the UWB is used in the initialization and setup phase, the narrowband signal that shares the common clock with the UWB is used in the control phase, the multi-millisecond ranging packet A is used in the ranging phase, and the SP0 packet is used in the report phase. When a value of the first field (2 bits) is a third value, it indicates the combination 3, that is, the narrowband signal that shares the common clock with the UWB is used in the initialization and setup phase, the SP0 packet is used in the control phase, the multi-millisecond ranging packet B is used in the ranging phase, and the narrowband signal that shares the common clock with the UWB is used in the report phase. When a value of the first field (2 bits) is a fourth value, it indicates the combination 4, that is, the narrowband signal that shares the common clock with the UWB is used in the initialization and setup phase, the SP0 packet is used in the control phase, the multi-millisecond ranging packet B is used in the ranging phase, and the SP0 packet is used in the report phase. The first value, the second value, the third value, and the fourth value are different from each other. For example, the first value, the second value, the third value, and the fourth value are 0, 1, 2, and 3, respectively.

In a possible implementation, the common physical layer configuration field may further include a second field, and the second field may indicate whether the multi-millisecond ranging packet in the ranging phase includes the synchronization header (SHR). It may be understood that because the multi-millisecond ranging packet A in the combination 1 and the combination 2 does not include the synchronization header, when the first field indicates the combination 1 or the combination 2, the second field may be set to a value (for example, 0), indicating that the multi-millisecond ranging packet in the ranging phase does not include the synchronization header.

In another possible implementation, when the first field indicates that the SP0 packet is used in the control phase (for example, the combination 3, the combination 4, or the combination 5), the common physical layer configuration field may further include a second field. The second field may indicate whether the multi-millisecond ranging packet in the ranging phase includes the synchronization header.

For example, a length of the second field may be 1 bit. For example, when a value of the second field (1 bit) is a first value, it indicates that the multi-millisecond ranging packet in the ranging phase includes the synchronization header. When a value of the second field (1 bit) is a second value, it indicates that the multi-millisecond ranging packet in the ranging phase does not include the synchronization header. The first value is different from the second value. For example, the first value and the second value are 0 and 1, respectively.

In a possible implementation, the common physical layer configuration field may further include a third field, and the third field may indicate a preamble sequence used for the SP0 packet in the control phase and/or a preamble sequence used for the SP0 packet in the report phase. Alternatively, the third field may indicate a preamble sequence used for an SP0 packet in the control phase and/or a preamble sequence used for an SP0 packet in the report phase, and a preamble sequence used for the synchronization header in the multi-millisecond ranging packet in the ranging phase. It may be understood that because the SP0 packet is used in neither the control phase nor the report phase in the combination 1, when the first field indicates the combination 1, the third field may indicate reserved.

In another possible implementation, when the first field indicates that the SP0 packet is used in the control phase (for example, the combination 3, the combination 4, or the combination 5) or that the SP0 packet is used in the report phase (for example, the combination 2, the combination 4, or the combination 5), that is, when the first field indicates any one of the combination 2 to the combination 5, the common physical layer configuration field may further include a third field. The third field may indicate a preamble sequence used for the SP0 packet in the control phase and/or a preamble sequence used for the SP0 packet in the report phase. Alternatively, the third field may indicate a preamble sequence used for an SP0 packet in the control phase and/or a preamble sequence used for an SP0 packet in the report phase, and a preamble sequence used for the synchronization header in the multi-millisecond ranging packet in the ranging phase.

For example, when the first field indicates that the narrowband signal that shares the common clock with the UWB is used in the control phase and the SP0 packet is used in the report phase (for example, the combination 2), the third field indicates a preamble sequence used for the SP0 packet in the report phase. When the first field indicates that the SP0 packet is used in the control phase and the narrowband signal that shares the common clock with the UWB is used in the report phase (for example, the combination 3), the third field indicates a preamble sequence used for the SP0 packet in the control phase. Optionally, if the multi-millisecond ranging packet in the ranging phase includes the synchronization header (for example, the value of the second field is the first value), the third field further indicates a preamble sequence used for the synchronization header in the multi-millisecond ranging packet in the ranging phase. When the first field indicates that the SP0 packet is used in both the control phase and the report phase (for example, the combination 4 or the combination 5), the third field indicates a preamble sequence used for the SP0 packet in the control phase and a preamble sequence used for the SP0 packet in the report phase. Optionally, if the multi-millisecond ranging packet in the ranging phase includes the synchronization header (for example, the value of the second field is the first value), the third field further indicates a preamble sequence used for the synchronization header in the multi-millisecond ranging packet in the ranging phase.

For example, the preamble sequence may be a ternary sequence (that is, Ipatov) with a length of 31, 91, or 127. For example, a length of the third field may be 5 bits. When a value of the third field (5 bits) ranges from 0 to 7, it indicates eight ternary sequences with a length of 31, respectively. When a value of the third field (5 bits) ranges from 8 to 23, it indicates 16 ternary sequences with a length of 127, respectively. When a value of the third field (5 bits) ranges from 24 to 31, it indicates eight ternary sequences with a length of 91, respectively.

FIG. 9 is a diagram of a format of a common physical layer configuration field according to an embodiment of this application. As shown in FIG. 9, the common physical layer configuration field may include a configuration type (Config Type) field (that is, the first field), and optionally further include a synchronization header (SHR) presence (SHR Presence) field (that is, the second field), and/or a preamble code (Preamble Code) field (that is, the third field). A length of the Config Type field (that is, the first field) may be 1 bit, 2 bits, or 3 bits. For descriptions of the Config Type field with different lengths, refer to the foregoing descriptions of the first field. Details are not described herein again. A length of the SHR Presence field may be 1 bit. For descriptions of the SHR Presence field, refer to the foregoing descriptions of the second field. Details are not described herein again. A length of the Preamble Code field may be 5 bits. For descriptions of the Preamble Code field, refer to the foregoing descriptions of the third field. Details are not described herein again.

It may be understood that the names and the lengths of the fields shown in FIG. 9 are merely examples, and this is not limited in embodiments of this application.

It may be understood that although the first field, the second field, and the third field in this embodiment of this application are described based on the combinations of the used wireless technologies provided in Table 1, a person skilled in the art may know that, with development and evolution of standards, there may be more or fewer combinations of used wireless technologies, or the combinations may change. However, the descriptions of the first field, the second field, and the third field in this embodiment of this application are not limited to the combinations of the used wireless technologies provided in Table 1.

In an optional embodiment, for the scenario 2 (no narrowband signal that shares a common clock with UWB exists, for example, the combination 5), the common physical layer configuration field includes a second field, and the first field may not exist or indicate reserved. The second field may indicate whether the multi-millisecond ranging packet in the ranging phase includes the synchronization header. For descriptions of the second field, refer to the foregoing descriptions. Details are not described herein again. Therefore, in the scenario 2, the first communication apparatus generates and sends the common physical layer configuration field, where the common physical layer configuration field includes the second field. Correspondingly, the second communication apparatus receives and processes the common physical layer configuration field. For example, the second communication apparatus may send or parse a multi-millisecond ranging packet in a subsequent ranging phase based on an indication of the second field in the common physical layer configuration field. For example, the common physical layer configuration field may further include a third field. The third field may indicate a preamble sequence used for the SP0 packet in the control phase and a preamble sequence used for the SP0 packet in the report phase. Optionally, if the multi-millisecond ranging packet in the ranging phase includes a synchronization header (for example, a value of the second field is a first value), the third field further indicates a preamble sequence used for the synchronization header in the multi-millisecond ranging packet in the ranging phase. For a value and a meaning of the third field, refer to the foregoing descriptions. Details are not described herein again.

In a possible implementation, the physical layer configuration method for UWB ranging may further include: The first communication apparatus sends or receives a physical layer management field. Correspondingly, the second communication apparatus receives or sends the physical layer management field. For example, a frame format of the physical layer management field may be shown in FIG. 7. The physical layer management field may include a control phase configuration field and a report phase configuration field. The control phase configuration field may indicate a physical layer configuration (for example, a rate, a SYNC length, an SFD sequence, a PHR length, and a symbol-to-chip mapping) of O-QPSK modulation for a narrowband signal that shares a common clock with UWB in the control phase. The report phase configuration field may indicate a physical layer configuration of O-QPSK modulation for a narrowband signal that shares a common clock with UWB in the report phase. For example, when a value of the control phase configuration field ranges from 1 to 9, it indicates nine physical layer configurations of O-QPSK in the control phase, respectively. When the value is another value, it indicates reserved. When a value of the report phase configuration field ranges from 1 to 9, it indicates nine physical layer configurations of O-QPSK in the report phase, respectively. When the value is another value, it indicates reserved. In other words, the physical layer management field in embodiments of this application does not need to indicate whether the synchronization header exists in the control phase, and does not need to indicate whether the UWB packet exists in the report phase. In other words, the meanings of the control phase configuration field and the report phase configuration field are changed in embodiments of this application.

It may be understood that an execution sequence of sending/receiving the physical layer management field and sending the common physical layer configuration field by the first communication apparatus is not limited.

In a possible implementation, the physical layer management field and the common physical layer configuration field may be located in a same frame, or may be located in different frames. This is not limited in embodiments of this application.

In a possible implementation, the common physical layer configuration field may be included in any one of the following messages: a start of ranging message in the initialization and setup phase, a response message in the initialization and setup phase, a poll message in the control phase, a response message in the control phase, or a message in the report phase. For example, the response message in the initialization and setup phase includes an advertising response compact frame (Advertising Response Compact frame) and a public advertising response compact frame (Public Advertising Response Compact frame). The start of ranging (start of ranging, SOR) message in the initialization and setup phase includes a start of ranging compact frame (Start of Ranging Compact frame) and a public start of ranging compact frame (Public Start of Ranging Compact frame). The poll message in the control phase includes a one-to-one poll compact frame (One-to-one Poll Compact frame) and a one-to-many poll compact frame (One-to-many Poll Compact frame). The response message in the control phase includes a response compact frame (RESP Compact frame) and a one-to-many response compact frame (One-to-many Response Compact frame). The message in the report phase includes a one-to-one responder report compact frame (One-to-one Responder Report Compact frame), a one-to-one responder secure report compact frame (One-to-one Responder secure Report Compact frame), a one-to-many responder report compact frame (One-to-many Responder Report Compact frame), and a one-to-many responder secure report compact frame (One-to-many Responder secure Report Compact frame).

It may be understood that, when the common physical layer configuration field is located in different frames, usable time of content or a parameter indicated by the common physical layer configuration field may differ. Discussion is performed in different cases below.

In a possible implementation, when the common physical layer configuration field is located in the start of ranging compact frame or the public start of ranging compact frame, the content indicated by the common physical layer configuration field may be used in one or more ranging cycles after the initialization and setup phase. When the common physical layer configuration field is located in the advertising response compact frame or the public advertising response compact frame, the content indicated by the common physical layer configuration field is a suggested parameter from a responder for one or more ranging cycles after the initialization and setup phase.

When the common physical layer configuration field is located in the one-to-one poll compact frame or the one-to-many poll compact frame, there are four cases: (1) Content or a parameter indicated by the first field is not used, and content or a parameter indicated by the second field (if present) and content or a parameter indicated by the third field (if present) are used in a ranging cycle in which the common physical layer configuration field is located. (2) Content or a parameter indicated by the first field is used in a next ranging cycle of a ranging cycle in which the common physical layer configuration field is located, and content indicated by the second field and content indicated by the third field are used in the ranging cycle in which the common physical layer configuration field is located. (3) Content or a parameter indicated by the common physical layer configuration field is not used. (4) Content or a parameter indicated by the first field is a suggested parameter for a next ranging cycle of a ranging cycle in which the common physical layer configuration field is located, and neither content or a parameter indicated by the second field (if present) nor content or a parameter indicated by the third field (if present) is used.

When the common physical layer configuration field is located in the response compact frame, the one-to-many response compact frame, the one-to-one responder report compact frame, the one-to-one responder secure report compact frame, the one-to-many responder report compact frame, or the one-to-many responder secure report compact frame, there are also four cases: (a) Content or a parameter indicated by the first field is not used, and content or a parameter indicated by the second field (if present) and content or a parameter indicated by the third field (if present) are suggested parameters for a next ranging cycle of a ranging cycle in which a common physical layer configuration field is located. (b) Content or a parameter indicated by the common physical layer configuration field is a suggested parameter for a next ranging cycle of a ranging cycle in which the common physical layer configuration field is located. (c) Content or a parameter indicated by the common physical layer configuration field is not used. (d) Content or a parameter indicated by the first field is a suggested parameter for a next ranging cycle of a ranging cycle in which the common physical layer configuration field is located, and neither content or a parameter indicated by the second field (if present) nor content or a parameter indicated by the third field (if present) is used.

For example, the first field (for example, the Config Type field), the second field (for example, the SHR Presence field), and the third field (for example, the Preamble Code field) may be divided into two groups. The first group includes the first field, and the second group includes the second field and the third field. Parameters/Content indicated by each field group may be classified into two types: parameters/content that can be configured in only the initialization and setup phase; or parameters/content that can be configured in both the initialization and setup phase and a subsequent ranging cycle. As shown in Table 2 below, Table 2 shows usable time of a parameter or content indicated by each field when the Config Type field, the SHR Presence field, and the Preamble Code field are present in different phases (or in different frames).

**Table 2**

| Rule | Phases in which the Config Type field, the SHR Presence field, and the Preamble Code field are present | Usable time of a parameter |
|---|---|---|
| Rule 1: The parameter indicated by the Config Type field can be configured in only the initialization and setup phase, and the parameters indicated by the SHR Presence field and the Preamble Code field can be configured in both the initialization and setup phase and a subsequent ranging cycle | Initialization and setup phase | If the Config Type field, the SHR Presence field, and the Preamble Code field are present in the SOR message in the initialization and setup phase, the parameters indicated by the Config Type field, the SHR Presence field, and the Preamble Code field are all used in the subsequent ranging cycle; or if the Config Type field, the SHR Presence field, and the Preamble Code field are present in the response message in the initialization and setup phase, the parameters indicated by the Config Type field, the SHR Presence field, and the Preamble Code field are suggested parameters from the responder for the subsequent ranging cycle |
| | Control phase | A configuration of the Config Type field is not used, and if the SHR Presence field and the Preamble Code field are present in the poll message in the control phase, the parameters indicated by the SHR Presence field and the Preamble Code field are used in a current ranging cycle, or if the SHR Presence field and the Preamble Code field are present in the response message in the control phase, the parameters indicated by the SHR Presence field and the Preamble Code field are suggested parameters for a next ranging cycle |
| | Report phase | The configuration of the Config Type field is not used, and the parameters indicated by the SHR Presence field and the Preamble Code field are suggested parameters for the next ranging cycle |
| Rule 2: The parameters indicated by the Config Type field, the SHR Presence field, and the Preamble Code field can all be configured in both the initialization and setup phase and a subsequent ranging cycle | Initialization and setup phase | If the Config Type field, the SHR Presence field, and the Preamble Code field are present in the SOR message in the initialization and setup phase, the parameters indicated by the Config Type field, the SHR Presence field, and the Preamble Code field are all used in the subsequent ranging cycle; or if the Config Type field, the SHR Presence field, and the Preamble Code field are present in the response message in the initialization and setup phase, the parameters indicated by the Config Type field, the SHR Presence field, and the Preamble Code field are suggested parameters from the responder for the subsequent ranging cycle |
| | Control phase | If the Config Type field, the SHR Presence field, and the Preamble Code field are present in the poll message in the control phase, the parameter indicated by the Config Type field is used in a next ranging cycle, and the parameters indicated by the SHR Presence field and the Preamble Code field are used in a current ranging cycle; or if the Config Type field, the SHR Presence field, and the Preamble Code field are present in the response message in the control phase, the parameters indicated by the Config Type field, the SHR Presence field, and the Preamble Code field are all suggested parameters for a next ranging cycle |
| | Report phase | The parameters indicated by the Config Type field, the SHR Presence field, and the Preamble Code field are all suggested parameters for the next ranging cycle |
| Rule 3: The parameters indicated by the Config Type field, the SHR Presence field, and the Preamble Code field can be configured in only the initialization and setup phase | Initialization and setup phase | If the Config Type field, the SHR Presence field, and the Preamble Code field are present in the SOR message in the initialization and setup phase, the parameters indicated by the Config Type field, the SHR Presence field, and the Preamble Code field are all used in a subsequent ranging cycle; or if the Config Type field, the SHR Presence field, and the Preamble Code field are present in the response message in the initialization and setup phase, the parameters indicated by the Config Type field, the SHR Presence field, and the Preamble Code field are suggested parameters from the responder for a subsequent ranging cycle |
| | Control phase | Configurations of the Config Type field, the SHR Presence field, and the Preamble Code field are not used |
| | Report phase | Configurations of the Config Type field, the SHR Presence field, and the Preamble Code field are not used |
| Rule 4: The parameter indicated by the Config Type field can be configured in both the initialization and setup phase and a subsequent ranging cycle, and the parameters indicated by the SHR Presence field and the Preamble Code field can be configured in only the initialization and setup phase | Initialization and setup phase | If the Config Type field, the SHR Presence field, and the Preamble Code field are present in the SOR message in the initialization and setup phase, the parameters indicated by the Config Type field, the SHR Presence field, and the Preamble Code field are all used in the subsequent ranging cycle; or if the Config Type field, the SHR Presence field, and the Preamble Code field are present in the response message in the initialization and setup phase, the parameters indicated by the Config Type field, the SHR Presence field, and the Preamble Code field are suggested parameters from the responder for the subsequent ranging cycle |
| | Control phase | Configurations of the SHR Presence field and the Preamble Code field are not used, and if the Config Type field is present in the poll message in the control phase, the parameter indicated by the Config Type field is used in a next ranging cycle, or if the Config Type field is present in the response message in the control phase, the parameter indicated by the Config Type field is a suggested parameter for a next ranging cycle |
| | Report phase | Configurations of the SHR Presence field and the Preamble Code field are not used, and the parameter indicated by the Config Type field is a suggested parameter for the next ranging cycle |

It may be understood that, although Table 2 shows the usable time of the three fields: the Config Type field, the SHR Presence field, and the Preamble Code field, it does not indicate that the common physical layer configuration field sent by the first communication apparatus in this embodiment of this application definitely includes the three fields. For example, if the common physical layer configuration field includes the Config Type field, the usable time of the parameter indicated by the Config Type field may be directly determined according to Table 2. If the common physical layer configuration field includes the Config Type field and the Preamble Code field, the usable time of the parameters indicated by the Config Type field and the Preamble Code field may be directly determined according to Table 2. If the common physical layer configuration field includes the SHR Presence field, the usable time of the parameter indicated by the SHR Presence field may be directly determined according to Table 2. If the common physical layer configuration field includes the Config Type field, the SHR Presence field, and the Preamble Code field, the usable time of the parameters indicated by the three fields is separately determined according to Table 2. Examples are not enumerated herein.

In a possible implementation, usable time of the parameter indicated by the first field differs when the first field is present in different phases, and therefore, the content or the parameter indicated by the first field may differ when the first field is located in different frames. For example, when the first field is present in the SOR message in the initialization and setup phase (for example, the (public) start of ranging compact frame), the first field may indicate a combination of wireless technologies used in the initialization and setup phase, the control phase, the ranging phase, and the report phase. Correspondingly, meanings indicated by the second field (if present) and the third field (if present) remain unchanged, as described above, and details are not described herein again. When the first field is present in the response message in the initialization and setup phase (for example, the (public) advertising response compact frame), the first field may indicate a suggested parameter from the responder (responder) for one or more ranging cycles after the initialization and setup phase. Correspondingly, the content indicated by the second field (if present) and the third field (if present) is also a suggested parameter from the responder (responder). When the first field is present in the poll message in the control phase (for example, the one-to-one poll compact frame or the one-to-many poll compact frame), the first field may indicate a combination of wireless technologies used in the ranging phase and the report phase in the current ranging cycle. Correspondingly, meanings indicated by the second field (if present) and the third field (if present) remain unchanged, as described above, and details are not described herein again. When the first field is present in the response message in the report phase (for example, the one-to-one responder (secure) report compact frame or the one-to-many responder (secure) report compact frame) or the response message in the poll phase (for example, the response compact frame or the one-to-many response compact frame), the first field may indicate a combination of wireless technologies used in a control phase, a ranging phase, and a report phase in the next ranging cycle. Correspondingly, the second field (if present) may be used to suggest whether a multi-millisecond ranging packet in the ranging phase in the next ranging cycle include a synchronization header. The third field (if present) may be used to suggest a preamble sequence used for an SP0 packet in the control phase and/or a preamble sequence used for an SP0 packet in the report phase in the next ranging cycle. Optionally, if the multi-millisecond ranging packet in the ranging phase in the next ranging cycle includes the synchronization header, the third field (if present) may be further used to suggest a preamble sequence used for the synchronization header in the multi-millisecond ranging packet.

In this embodiment of this application, when the SYNC field and the SFD field are optional parts of the MMS ranging packet, the common physical layer configuration field is designed to improve the physical layer configuration in the ranging session, for example, to indicate one or more of the following: the combination of the wireless technologies used in the multiple phases, whether the multi-millisecond ranging packet in the ranging phase includes the synchronization header, the preamble sequence used for the SP0 packet in the control phase and/or the preamble sequence used for the SP0 packet in the report phase, or the preamble sequence used for the synchronization header in the multi-millisecond ranging packet in the ranging phase. In this way, the two ranging parties can align physical layer related parameters, thereby supporting completion of the ranging procedure, and improving ranging efficiency and reliability. In addition, in this embodiment of this application, usable time of the parameters or the content respectively indicated by the first field, the second field, and the third field is designed based on different phases in which the common physical layer configuration field is present, to implement flexible parameter configuration.

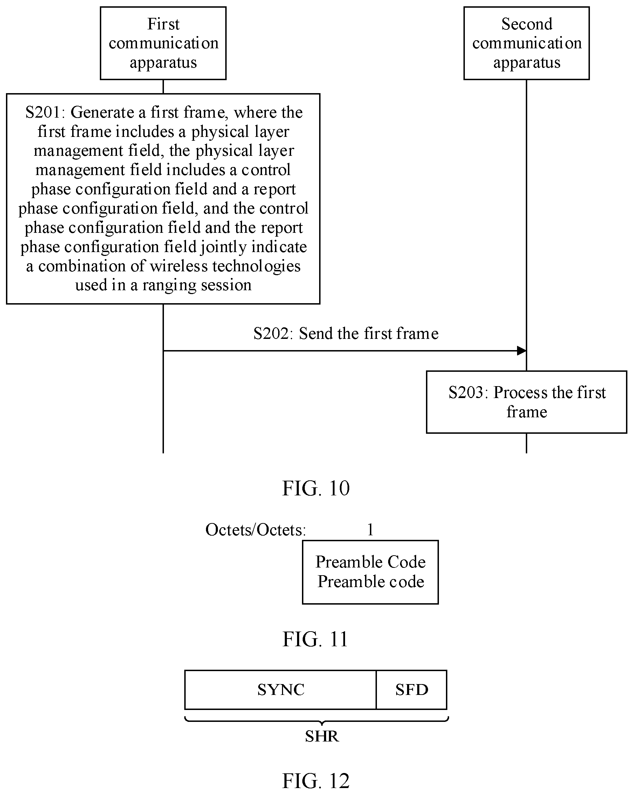

FIG. 10 is another schematic flowchart of a physical layer configuration method for UWB ranging according to an embodiment of this application. The method mainly describes a physical layer configuration in a ranging session when a UWB SYNC field and a UWB SFD field are optional parts of a control phase and are not parts of an MMS ranging packet. A first communication apparatus and a second communication apparatus in the method may be any two devices that can perform data communication in FIG. 1 or FIG. 2. In a possible implementation, the first communication apparatus in the method may be used as an initiator (initiator), and the second communication apparatus may be used as a responder (responder). Certainly, the first communication apparatus may alternatively be used as a responder (responder), and the second communication apparatus may be used as an initiator (initiator). This is not limited in embodiments of this application.

As shown in FIG. 10, the physical layer configuration method for UWB ranging includes but is not limited to the following steps.

S201: The first communication apparatus generates a first frame, where the first frame includes a physical layer management field, the physical layer management field includes a control phase configuration field and a report phase configuration field, the control phase configuration field and the report phase configuration field jointly indicate a combination of wireless technologies used in a ranging session, the ranging session includes a control phase and a ranging phase, a multi-millisecond ranging packet used in the ranging phase does not include a synchronization header, a narrowband signal that shares a common clock with UWB is used in the control phase or a first UWB packet is used in the control phase, and the first UWB packet includes a synchronization header.

S202: The first communication apparatus sends the first frame.

Correspondingly, the second communication apparatus receives the first frame.

S203: The second communication apparatus processes the first frame. For example, the second communication apparatus interprets/parses the physical layer management field in the first frame, and determines a wireless technology used in each phase of the ranging session, to subsequently transmit information by using the corresponding wireless technology based on an indication of the physical layer management field.

In a possible implementation, this embodiment of this application may be described based on that a SYNC field and an SFD field are optional parts of the control phase.

In a possible implementation, the ranging session may include an initialization and setup phase, the control phase, and the ranging phase, and optionally further include a report phase. Although the report phase is an optional phase of the ranging session (or a ranging cycle), the report phase may still be taken into account when the combination of the wireless technologies used in the ranging session is considered. That is, the control phase configuration field and the report phase configuration field may jointly indicate the combination of the wireless technologies used in the initialization and setup phase, the control phase, the ranging phase, and the report phase.

In a possible implementation, the combination of the wireless technologies used in the ranging session includes: a narrowband signal (for example, a narrowband signal that shares a common clock with UWB or a narrowband signal that does not share a common clock with UWB) is used in the initialization and setup phase, a narrowband signal (for example, a narrowband signal that shares a common clock with UWB) or a first UWB packet (the first UWB packet includes a synchronization header) is used in the control phase, a multi-millisecond ranging packet (the multi-millisecond ranging packet does not include a synchronization header) is used in the ranging phase, and a narrowband signal (for example, a narrowband signal that shares a common clock with UWB) or a second UWB packet (for example, a PPDU format of the second UWB packet is an STS packet configuration 0) is used in the report phase. For example, a PPDU format of the multi-millisecond ranging packet in this embodiment of this application may be the PPDU configuration 8 (PPDU config 8) shown in FIG. 4. A format represented by the STS packet configuration 0 is the format represented by PPDU config 0 shown in FIG. 4. In other words, that the PPDU format of the UWB packet is the STS packet configuration 0 indicates that the UWB packet includes a SYNC field, an SFD field, a PHY field, and a PHY payload, but does not include an STS. For ease of description, in this embodiment of this application, a UWB packet whose PPDU format is the STS packet configuration 0 is referred to as an "SP0 packet". Details are not described below again.

For clarity, the combination of the wireless technologies used in the initialization and setup phase, the control phase, the ranging phase, and the report phase is illustrated in the following table. As shown in Table 3 below, Table 3 shows combinations of wireless technologies used in the foregoing four phases (namely, the initialization and setup phase, the control phase, the ranging phase, and the report phase).

**Table 3**

| | Initialization and setup phase | Control phase | Ranging phase | Report phase |
|---|---|---|---|---|
| Combination 1 | Narrowband signal that shares a common clock with UWB | Narrowband signal that shares a common clock with UWB | Multi-millisecond ranging packet A | Narrowband signal that shares a common clock with UWB |
| Combination 2 | Narrowband signal that shares a common clock with UWB | Narrowband signal that shares a common clock with UWB | Multi-millisecond ranging packet A | SP0 packet |
| Combination 3 | Narrowband signal that shares a common clock with UWB | First UWB packet | Multi-millisecond ranging packet A | Narrowband signal that shares a common clock with UWB |
| Combination 4 | Narrowband signal that shares a common clock with UWB | First UWB packet | Multi-millisecond ranging packet A | SP0 packet |
| Combination 5 | Narrowband signal that does not share a | First UWB packet | Multi-millisecond | SP0 packet |

| | common clock with UWB | | ranging packet A | |
|---|---|---|---|---|
| Combination 6 | Narrowband signal that does not share a common clock with UWB | Narrowband signal that does not share a common clock with UWB | Multi-millisecond ranging packet A | Narrowband signal that does not share a common clock with UWB |

It may be understood that Table 3 is merely an example. During actual application, combinations of wireless technologies used in the initialization and setup phase, the control phase, the ranging phase, and the report phase may be more or less than the combinations shown in Table 3. It may be further understood that the wireless technologies in the phases shown in Table 3 are merely examples. During actual application, wireless technologies used in the phases may be different from those in Table 3.

In a possible implementation, the narrowband signal that shares the common clock with the UWB may be modulated by using O-QPSK (offset quadrature phase shift keying). Therefore, in some scenarios, "O-QPSK" may indicate "narrowband signal that shares a common clock with UWB". The narrowband signal that does not share the common clock with the UWB may be referred to as "out of band (out of band, OOB)", and indicates a narrowband signal that is not constrained in the UWB protocol.

In a possible implementation, the multi-millisecond ranging packet A in Table 3 may represent a multi-millisecond ranging packet that does not include a synchronization header (SHR).

In a possible implementation, a data rate of the SP0 packet in Table 3 may be 1.95 Mbps. In the SP0 packet, a synchronization field may include 64 preamble symbols, an SFD sequence may be [-1 -1 -1 +1 -1 -1 +1 - 1], and a length of the SFD field may be 8. Configurations of SP0 packets in a control phase and a report phase of a same ranging cycle (or ranging round) may be the same, and the SP0 packets may be transmitted on a same UWB channel. Herein, "same configuration" may mean that quantities of preamble symbols in synchronization fields are the same, indexes (index) of preamble sequences are the same, and SFD sequences are the same.

In a possible implementation, the first communication apparatus generates and sends the first frame, where the first frame includes the physical layer management field. For example, a frame format of the physical layer management field may be shown in FIG. 7. The physical layer management field may include the control phase configuration field and the report phase configuration field. The control phase configuration field and the report phase configuration field may jointly indicate the combination of the wireless technologies used in the ranging session. Correspondingly, the second communication apparatus receives and processes the first frame. For example, the second communication apparatus interprets/parses the physical layer management field in the first frame, and determines a wireless technology used in each phase of the ranging session, to subsequently transmit information by using the corresponding wireless technology based on an indication of the physical layer management field.

In a possible implementation, the control phase configuration field may indicate a physical layer configuration in the control phase. For example, a value of the control phase configuration field ranges from 1 to 9, indicating nine configurations (for example, a rate, a SYNC length, an SFD sequence, a PHR length, and a symbol-to-chip mapping) of O-QPSK for the narrowband signal that shares the common clock with the UWB in the control phase. A value of 14 indicates that the first UWB packet in the control phase includes only a UWB SYNC field and a UWB SFD field. A value of 15 indicates that a UWB packet exists before a UWB SYNC field and a UWB SFD field in the control phase. The report phase configuration field may indicate a physical layer configuration in the report phase. For example, a value of the report phase configuration field ranges from 1 to 9, indicating nine configurations of O-QPSK for the narrowband signal that shares the common clock with the UWB in the report phase. A value of 15 indicates that a UWB packet is used for reporting. The value of the control phase configuration field and the value of the report phase configuration field may indirectly indicate a combination of wireless technologies used in the ranging session.

For example, a relationship between the value of the control phase configuration field and the value of the report phase configuration field, and the combination of the wireless technologies used in the ranging session is shown in the following Table 4.

**Table 4**

| Combination of wireless technologies used in the ranging session | Value of the control phase configuration field | Value of the report phase configuration field |
|---|---|---|
| Combination 1 | 1 to 9 | 1 to 9 |
| Combination 2 | 1 to 9 | 15 |
| Combination 3 | 14 or 15 | 1 to 9 |
| Combination 4 or 5 | 14 or 15 | 15 |

The combination 1 in Table 4 indicates that the narrowband signal that shares the common clock with the UWB is used in each of the initialization and setup phase, the control phase, and the report phase, and the multi-millisecond ranging packet A is used in the ranging phase. The combination 2 in Table 4 indicates that the narrowband signal that shares the common clock with the UWB is used in both the initialization and setup phase and the control phase, the multi-millisecond ranging packet A is used in the ranging phase, and the SP0 packet is used in the report phase. The combination 3 in Table 4 indicates that the narrowband signal that shares the common clock with the UWB is used in both the initialization and setup phase and the report phase, the first UWB packet is used in the control phase, and the multi-millisecond ranging packet A is used in the ranging phase. The combination 4 in Table 4 indicates that the narrowband signal that shares the common clock with the UWB is used in the initialization and setup phase, the first UWB packet is used in the control phase, the multi-millisecond ranging packet A is used in the ranging phase, and the SP0 packet is used in the report phase. The combination 5 in Table 4 indicates that the narrowband signal that does not share the common clock with the UWB is used in the initialization and setup phase, the first UWB packet is used in the control phase, the multi-millisecond ranging packet A is used in the ranging phase, and the SP0 packet is used in the report phase.

It may be understood that, in the combination 6 in Table 3, except for the ranging phase in which the multi-millisecond ranging packet A is used, wireless technologies used in other phases are not constrained in the UWB protocol, and the multi-millisecond ranging packet A does not include a synchronization header, and therefore, the combination 6 in Table 3 may not be indicated in this embodiment of this application.

In a possible implementation, the first frame may further include a third field, and the third field may indicate a preamble sequence used for the first UWB packet in the control phase and/or a preamble sequence used for the SP0 packet in the report phase. It may be understood that because the narrowband signal that shares the common clock with the UWB is used in both the control phase and the report phase in the combination 1, when the value of the control phase configuration field is any value from 1 to 9 and the value of the report phase configuration field is any value from 1 to 9 (for example, the combination 1), the third field in the first frame may indicate reserved.

Alternatively, when the value of the control phase configuration field is 14 or 15 (for example, the combination 3, or the combination 4, or the combination 5), or when the value of the report phase configuration field is 15 (for example, the combination 2), the first frame further includes a third field. The third field may indicate a preamble sequence used for the first UWB packet in the control phase and/or a preamble sequence used for the SP0 packet in the report phase.

For example, when the value of the control phase configuration field is any value from 1 to 9, and the value of the report phase configuration field is 15 (for example, the combination 2), the third field indicates a preamble sequence used for the SP0 packet in the report phase. When the value of the control phase configuration field is 14 or 15, and the value of the report phase configuration field is any value from 1 to 9 (for example, the combination 3), the third field indicates a preamble sequence used for the first UWB packet in the control phase. When the value of the control phase configuration field is 14 or 15, and the value of the report phase configuration field is 15 (for example, the combination 4 or 5), the third field indicates a preamble sequence used for the first UWB packet in the control phase and a preamble sequence used for the SP0 packet in the report phase. It may be understood that a same preamble sequence is used in both the first UWB packet and the SP0 packet herein.

For example, the preamble sequence may be a ternary sequence (that is, Ipatov) with a length of 31, 91, or 127. For example, a length of the third field may be 5 bits. When a value of the third field (5 bits) ranges from 0 to 7, it indicates eight ternary sequences with a length of 31, respectively. When a value of the third field (5 bits) ranges from 8 to 23, it indicates 16 ternary sequences with a length of 127, respectively. When a value of the third field (5 bits) ranges from 24 to 31, it indicates eight ternary sequences with a length of 91, respectively.

For example, the third field may be referred to as a preamble code (Preamble Code) field, and the third field may alternatively have another name. This is not limited in embodiments of this application. FIG. 11 is a diagram of a format of a preamble code field according to an embodiment of this application. As shown in FIG. 11, a length of the preamble code (Preamble Code) field may be 1 Octet (8 bits in total). For descriptions of the Preamble Code field, refer to the foregoing descriptions of the third field. Details are not described herein again. It may be understood that the name and the length of the Preamble Code field shown in FIG. 11 are merely examples, and this is not limited in embodiments of this application.

It may be understood that, although the combinations of the wireless technologies used in the initialization and setup phase, the control phase, the ranging phase, and the report phase in this embodiment of this application are described based on the combinations of the used wireless technologies provided in Table 3, a person skilled in the art may know that, with development and evolution of standards, there may be more or fewer combinations of used wireless technologies, or the combinations may change. However, the descriptions of the control phase configuration field, the report phase configuration field, and the third field in this embodiment of this application are not limited to the combinations of the used wireless technologies provided in Table 3.

In a possible implementation, when the value of the control phase configuration field is 14, a PPDU format of the first UWB packet may include only a synchronization header (that is, a SYNC field and an SFD field). In other words, this embodiment of this application defines a PPDU type, as shown in FIG. 12. FIG. 12 is a diagram of a PPDU format according to an embodiment of this application. As shown in FIG. 12, the PPDU format includes only a SYNC field and an SFD field.

In another possible implementation, when the value of the control phase configuration field is 15, the first UWB packet may include two UWB packets. A PPDU format of one UWB packet includes only a synchronization header, as shown in FIG. 12; and a PPDU format of the other UWB packet is an STS packet configuration 0. In other words, for the combination 3, the combination 4, and the combination 5 in Table 3, an SP0 packet exists before the UWB SYNC field and the UWB SFD field in the control phase.

In a possible implementation, the first frame may be any one of the following messages: a start of ranging message in the initialization and setup phase, a response message in the initialization and setup phase, a poll message in the control phase, a response message in the control phase, or a message in the report phase. For example, the response message in the initialization and setup phase includes an advertising response compact frame (Advertising Response Compact frame) and a public advertising response compact frame (Public Advertising Response Compact frame). The start of ranging (SOR) message in the initialization and setup phase includes a start of ranging compact frame (Start of Ranging Compact frame) and a public start of ranging compact frame (Public Start of Ranging Compact frame). The poll message in the control phase includes a one-to-one poll compact frame (One-to-one Poll Compact frame) and a one-to-many poll compact frame (One-to-many Poll Compact frame). The response message in the control phase includes a response compact frame (RESP Compact frame) and a one-to-many response compact frame (One-to-many Response Compact frame). The message in the report phase includes a one-to-one responder report compact frame (One-to-one Responder Report Compact frame), a one-to-one responder secure report compact frame (One-to-one Responder secure Report Compact frame), a one-to-many responder report compact frame (One-to-many Responder Report Compact frame), and a one-to-many responder secure report compact frame (One-to-many Responder secure Report Compact frame).

It may be understood that, when the first frame differs, usable time of content or a parameter indicated by the physical layer management field in the first frame and/or content or a parameter indicated by the third field may differ. Discussion is performed in different cases below.

In a possible implementation, when the first frame is the SOR message in the initialization and setup phase (for example, the start of ranging compact frame or the public start of ranging compact frame), the content or the parameter indicated by the physical layer management field and the content or the parameter indicated by the third field are used in one or more ranging cycles after the initialization and setup phase. When the first frame is the response message in the initialization and setup phase (for example, the advertising response compact frame or the public advertising response compact frame), the content or the parameter indicated by the physical layer management field and the content or the parameter indicated by the third field are suggested parameters from the responder for one or more ranging cycles after the initialization and setup phase.

When the first frame is the poll message in the control phase (for example, the one-to-one poll compact frame or the one-to-many poll compact frame), there are four cases: (1) The content or the parameter indicated by the physical layer management field is not used, and the content or the parameter indicated by the third field is used in a ranging cycle in which the first frame is located. (2) The content or the parameter indicated by the physical layer management field is used in a next ranging cycle of a ranging cycle in which the first frame is located, and the content or the parameter indicated by the third field is used in the ranging cycle in which the first frame is located. (3) Neither the content or the parameter indicated by the physical layer management field nor the content or the parameter indicated by the third field is used. (4) The content or the parameter indicated by the physical layer management field is a suggested parameter for a next ranging cycle of a ranging cycle in which the first frame is located, and the content or the parameter indicated by the third field is not used.

When the first frame is the response message in the control phase (for example, the response compact frame or the one-to-many response compact frame) or the message in the report phase (for example, the one-to-one responder report compact frame, the one-to-one responder secure report compact frame, the one-to-many responder report compact frame, or the one-to-many responder secure report compact frame), there are also four cases: (a) The content or the parameter indicated by the physical layer management field is not used, and the content or the parameter indicated by the third field is a suggested parameter for a next ranging cycle of a ranging cycle in which the first frame is located. (b) The content or the parameter indicated by the physical layer management field and the content or the parameter indicated by the third field are suggested parameters for a next ranging cycle of a ranging cycle in which the first frame is located. (c) Neither the content or the parameter indicated by the physical layer management field nor the content or the parameter indicated by the third field is used. (d) The content or the parameter indicated by the physical layer management field is a suggested parameter for a next ranging cycle of a ranging cycle in which the first frame is located, and the content or the parameter indicated by the third field is not used.

For example, the physical layer management field includes the control phase configuration field and the report phase configuration field. The control phase configuration (Control Phase Config) field, the report phase configuration (Report Phase Config) field, and the third field (for example, the Preamble Code field) may be divided into two groups. The first group includes the Control Phase Config field and the Report Phase Config field, and the second group includes the third field. Parameters/Content indicated by each field group may be classified into two types: parameters/content that can be configured in only the initialization and setup phase; or parameters/content that can be configured in both the initialization and setup phase and a subsequent ranging cycle. As shown in Table 5 below, Table 5 shows usable time of a parameter or content indicated by each field when the Control Phase Config field, the Report Phase Config field, and the Preamble Code field are present in different phases.

**Table 5**

| Rule | Phases in which the Control Phase Config field, the Report Phase Config field, and the Preamble Code field are present | Usable time of a parameter |
|---|---|---|
| Rule 1: The parameters indicated by the Control Phase Config field and the Report Phase Config field can be configured in only the initialization and setup phase, and the parameter indicated by the Preamble Code field can be configured in both the initialization and setup phase and a subsequent ranging cycle | Initialization and setup phase | If the Control Phase Config field, the Report Phase Config field, and the Preamble Code field are present in the SOR message in the initialization and setup phase, the parameters indicated by the Control Phase Config field, the Report Phase Config field, and the Preamble Code field are all used in the subsequent ranging cycle; or if the Control Phase Config field, the Report Phase Config field, and the Preamble Code field are present in the response message in the initialization and setup phase, the parameters indicated by the Control Phase Config field, the Report Phase Config field, and the Preamble Code field are suggested parameters from the responder for the subsequent ranging cycle |
| | Control phase | The parameters indicated by the Control Phase Config field and the Report Phase Config field are not used, and if the Preamble Code field is present in the poll message in the control phase, the parameter indicated by the Preamble Code field is used in a current ranging cycle; or if the Preamble Code field is present in Resp, the parameter indicated by the Preamble Code field is a suggested parameter for a next ranging cycle |
| | Report phase | The parameters indicated by the Control Phase Config field and the Report Phase Config field are not used, and the parameter indicated by the Preamble Code field is a suggested parameter for the next ranging cycle |
| Rule 2: The parameters indicated by the Control Phase Config field, the Report Phase Config field, and the Preamble Code field can all be configured in both the initialization and setup phase and a subsequent ranging cycle | Initialization and setup phase | If the Control Phase Config field, the Report Phase Config field, and the Preamble Code field are present in the SOR message in the initialization and setup phase, the parameters indicated by the Control Phase Config field, the Report Phase Config field, and the Preamble Code field are all used in the subsequent ranging cycle; or if the Control Phase Config field, the Report Phase Config field, and the Preamble Code field are present in the response message in the initialization and setup phase, the parameters indicated by the Control Phase Config field, the Report Phase Config field, and the Preamble Code field are suggested parameters from the responder for the subsequent ranging cycle |
| | Control phase | If the Control Phase Config field, the Report Phase Config field, and the Preamble Code field are present in the poll message in the control phase, the parameters indicated by the Control Phase Config field and the Report Phase Config field are used in a next ranging cycle, and the parameter indicated by the Preamble Code field is used in a current ranging cycle; or if the Control Phase Config field, the Report Phase Config field, and the Preamble Code field are present in the response message in the control phase, the parameters indicated by the Control Phase Config field, the Report Phase Config field, and the Preamble Code field are all suggested parameters for a next ranging cycle |
| | Report phase | The parameters indicated by the Control Phase Config field, the Report Phase Config field, and the Preamble Code field are all suggested parameters for the next ranging cycle |
| Rule 3: The parameters indicated by the Control Phase Config field, the Report Phase Config field, and the Preamble Code field can all be configured in only the initialization and setup phase | Initialization and setup phase | If the Control Phase Config field, the Report Phase Config field, and the Preamble Code field are present in the SOR message in the initialization and setup phase, the parameters indicated by the Control Phase Config field, the Report Phase Config field, and the Preamble Code field are all used in a subsequent ranging cycle; or if the Control Phase Config field, the Report Phase Config field, and the Preamble Code field are present in the response message in the initialization and setup phase, the parameters indicated by the Control Phase Config field, the Report Phase Config field, and the Preamble Code field are suggested parameters from the responder for a subsequent ranging cycle |
| | Control phase | The parameters indicated by the Control Phase Config field, the Report Phase Config field, and the Preamble Code field are not used |
| | Report phase | The parameters indicated by the Control Phase Config field, the Report Phase Config field, and the Preamble Code field are not used |
| Rule 4: The parameters indicated by the Control Phase Config field and the Report Phase Config field can be configured in both the initialization and setup phase and a subsequent ranging cycle, and the parameter indicated by the Preamble Code field can be configured in only the initialization and setup phase | Initialization and setup phase | If the Control Phase Config field, the Report Phase Config field, and the Preamble Code field are present in the SOR message in the initialization and setup phase, the parameters indicated by the Control Phase Config field, the Report Phase Config field, and the Preamble Code field are all used in the subsequent ranging cycle; or if the Control Phase Config field, the Report Phase Config field, and the Preamble Code field are present in the response message in the initialization and setup phase, the parameters indicated by the Control Phase Config field, the Report Phase Config field, and the Preamble Code field are suggested parameters from the responder for the subsequent ranging cycle |
| | Control phase | A configuration of the Preamble Code field is not used, and if the Control Phase Config field and the Report Phase Config field are present in the poll message in the control phase, the parameters indicated by the Control Phase Config field and the Report Phase Config field are used in a next ranging cycle, or if the Control Phase Config field and the Report Phase Config field are present in the response message in the control phase, the parameters indicated by the Control Phase Config field and the Report Phase Config field are all suggested parameters for a next ranging cycle |
| | Report phase | The configuration of the Preamble Code field is not used, and the parameters indicated by the Control Phase Config field and the Report Phase Config field are suggested parameters for the next ranging cycle |

It may be understood that, although Table 5 shows the usable time of the three fields: the Control Phase Config field, the Report Phase Config field, and the Preamble Code field, it does not indicate that the first frame sent by the first communication apparatus in this embodiment of this application definitely includes the three fields. For example, if the first frame includes the Control Phase Config field and the Report Phase Config field, the usable time of the parameters indicated by the Control Phase Config field and the Report Phase Config field may be directly determined according to Table 5. If the first frame includes the Control Phase Config field, the Report Phase Config field, and the Preamble Code field, the usable time of the parameters indicated by the three fields is separately determined according to Table 2.

In a possible implementation, usable time of the parameter indicated by the physical layer management field differs when the physical layer management field is present in different phases, and therefore, the content or the parameter indicated by the physical layer management field may differ when the first frame differs. For example, when the first frame is the start of ranging compact frame or the public start of ranging compact frame, the physical layer management field may indicate a combination of wireless technologies used in the initialization and setup phase, the control phase, the ranging phase, and the report phase. Correspondingly, a meaning indicated by the third field (if present) remains unchanged, as described above, and details are not described herein again. When the first frame is the advertising response compact frame or the public advertising response compact frame, the physical layer management field may indicate a suggested parameter from the responder (responder) for one or more ranging cycles after the initialization and setup phase. Correspondingly, the content indicated by the third field (if present) is also a suggested parameter from the responder (responder). When the first frame is the one-to-one poll compact frame or the one-to-many poll compact frame, the physical layer management field may indicate a combination of wireless technologies used in the ranging phase and the report phase. Correspondingly, a meaning indicated by the third field (if present) remains unchanged, as described above, and details are not described herein again. When the first frame is the one-to-one responder report compact frame, or the one-to-one responder secure report compact frame, or the one-to-many responder report compact frame, or the one-to-many responder secure report compact frame, or the response compact frame, or the one-to-many response compact frame, the physical layer management field may be used to suggest a combination of wireless technologies used in a control phase, a ranging phase, and a report phase in the next ranging cycle. Correspondingly, the third field (if present) may be used to suggest a preamble sequence used for a first UWB packet in the control phase and/or a preamble sequence used for an SP0 packet in the report phase in the next ranging cycle.

In this embodiment of this application, when the UWB SYNC field and the UWB SFD field are optional parts of the control phase, a PPDU format is defined to include only the SHR, the multi-millisecond ranging packet in the ranging phase is defined not to include the SHR, and the physical layer management field and the third field are designed, to improve the physical layer configuration in the ranging session, for example, to indicate one or more of the following: the combination of the wireless technologies used in the multiple phases, and the preamble sequence used for the first UWB packet in the control phase and/or the preamble sequence used for the SP0 packet in the report phase. In this way, the two ranging parties can align physical layer related parameters, thereby supporting completion of the ranging procedure, and improving ranging efficiency and reliability. In addition, in this embodiment of this application, usable time of the parameters or the content respectively indicated by the physical layer management field and the third field is designed based on different phases in which the physical layer management field and the third field are present, to implement flexible parameter configuration.

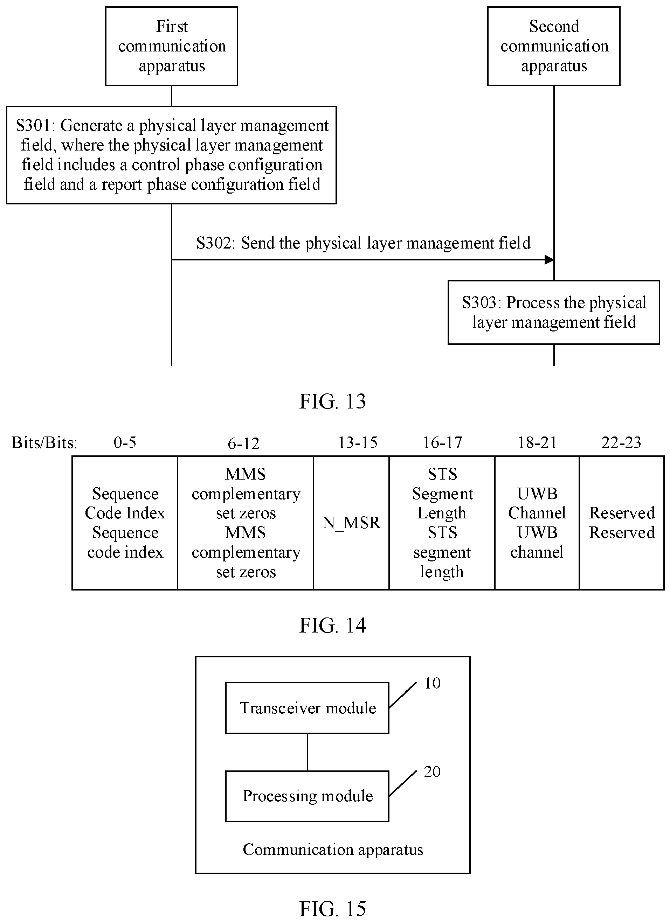

FIG. 13 is still another schematic flowchart of a physical layer configuration method for UWB ranging according to an embodiment of this application. The method mainly describes a physical layer configuration in a ranging session when a SYNC field and an SFD field are optional parts of an MMS ranging packet. A first communication apparatus and a second communication apparatus in the method may be any two devices that can perform data communication in FIG. 1 or FIG. 2. In a possible implementation, the first communication apparatus in the method may be used as an initiator (initiator), and the second communication apparatus may be used as a responder (responder). Certainly, the first communication apparatus may alternatively be used as a responder (responder), and the second communication apparatus may be used as an initiator (initiator). This is not limited in embodiments of this application.

As shown in FIG. 13, the physical layer configuration method for UWB ranging includes but is not limited to the following steps.

S301: The first communication apparatus generates a physical layer management field, where the physical layer management field includes a control phase configuration field and a report phase configuration field.

S302: The first communication apparatus sends the physical layer management field.

Correspondingly, the second communication apparatus receives the physical layer management field.

S303: The second communication apparatus processes the physical layer management field. For example, the second communication apparatus interprets/parses the physical layer management field, and determines wireless technologies in a control phase, a ranging phase, and a report phase, to subsequently transmit information by using the corresponding wireless technologies based on an indication of the physical layer management field.

In a possible implementation, this embodiment of this application may be described based on that a SYNC field and an SFD field that are optional parts of an MMS (multi-millisecond) ranging packet.

In a possible implementation, the control phase configuration field and/or the report phase configuration field may directly or indirectly indicate the wireless technologies in the multiple phases in the control phase, the ranging phase, and the report phase. The wireless technologies used in the control phase and the report phase are the same. For example, a combination of the wireless technologies used in the control phase, the ranging phase, and the report phase may include: a narrowband signal (for example, a narrowband signal that shares a common clock with UWB) or a UWB packet (for example, a PPDU format of the UWB packet is an STS packet configuration 0) is used in the control phase, a multi-millisecond ranging packet that carries a synchronization header or a multi-millisecond ranging packet that does not carry a synchronization header is used in the ranging phase, and a narrowband signal (for example, a narrowband signal that shares a common clock with UWB) or a UWB packet (for example, a PPDU format of the UWB packet is an STS packet configuration 0) is used in the report phase. For example, a PPDU format of the multi-millisecond ranging packet in this embodiment of this application may be the PPDU configuration 8 (PPDU config 8) shown in FIG. 4. A format represented by the STS packet configuration 0 is the format represented by PPDU config 0 shown in FIG. 4. In other words, that the PPDU format of the UWB packet is the STS packet configuration 0 indicates that the UWB packet includes a SYNC field, an SFD field, a PHY field, and a PHY payload, but does not include an STS. For ease of description, in this embodiment of this application, a UWB packet whose PPDU format is the STS packet configuration 0 is referred to as an "SP0 packet". Details are not described below again.

For clarity, the combination of the wireless technologies used in the initialization and setup phase, the control phase, the ranging phase, and the report phase is illustrated in the following table. As shown in Table 6 below, Table 6 shows combinations of wireless technologies used in the foregoing four phases (namely, the initialization and setup phase, the control phase, the ranging phase, and the report phase).

**Table 6**

| | Initialization and setup phase | Control phase | Ranging phase | Report phase |
|---|---|---|---|---|
| Combination 1 | Narrowband signal that shares a common clock with UWB | Narrowband signal that shares a common clock with UWB | Multi-millisecond ranging packet A | Narrowband signal that shares a common clock with UWB |
| Combination 2 | Narrowband signal that shares a common clock with UWB | SP0 packet | Multi-millisecond ranging packet B | SP0 packet |

It may be understood that Table 6 is merely an example. During actual application, combinations of wireless technologies used in the initialization and setup phase, the control phase, the ranging phase, and the report phase may be more or less than the combinations shown in Table 6, but wireless technologies used in the control phase and the report phase are the same. It may be further understood that the wireless technologies in the phases shown in Table 6 are merely examples. During actual application, wireless technologies used in the phases may be different from those in Table 6.

It may be further understood that Table 6 is merely an example. During actual application, both the combination 1 and the combination 2 may include only wireless technologies in the control phase, the ranging phase, and the report phase.

In a possible implementation, the narrowband signal that shares the common clock with the UWB may be modulated by using O-QPSK (offset quadrature phase shift keying). Therefore, in some scenarios, "O-QPSK" may indicate "narrowband signal that shares a common clock with UWB".

In a possible implementation, the multi-millisecond ranging packet A in Table 6 may represent a multi-millisecond ranging packet that does not carry a synchronization header (SHR). The multi-millisecond ranging packet B in Table 6 represents a multi-millisecond ranging packet that may carry a synchronization header (SHR). The synchronization header (SHR) includes a SYNC field and an SFD field.

In a possible implementation, a data rate of the SP0 packet in Table 6 may be 1.95 Mbps. In the SP0 packet, a synchronization field may include 64 preamble symbols, an SFD sequence may be [-1 -1 -1 +1 -1 -1 +1 - 1], and a length of the SFD field may be 8. Configurations of SP0 packets in a control phase and a report phase of a same ranging cycle (or ranging round) may be the same, and the SP0 packets may be transmitted on a same UWB channel. Herein, "same configuration" may mean that quantities of preamble symbols in synchronization fields are the same, indexes (index) of preamble sequences are the same, and SFD sequences are the same.

In a possible implementation, the first communication apparatus generates and sends the physical layer management field, where the physical layer management field may include the control phase configuration field and the report phase configuration field. A length of the control phase configuration field is 4 bits, and a length of the report phase configuration field is also 4 bits. For example, a frame format of the physical layer management field may be shown in FIG. 7. The control phase configuration field and/or the report phase configuration field may directly or indirectly indicate the wireless technologies in the multiple phases in the control phase, the ranging phase, and the report phase.

In a possible implementation, the physical layer management field may be included in a start of ranging message in the initialization and setup phase, or a response message in the initialization and setup phase. For example, the response message in the initialization and setup phase includes an advertising response compact frame (Advertising Response Compact frame) and a public advertising response compact frame (Public Advertising Response Compact frame). The start of ranging (start of ranging, SOR) message in the initialization and setup phase includes a start of ranging compact frame (Start of Ranging Compact frame) and a public start of ranging compact frame (Public Start of Ranging Compact frame). It may be understood that, when the physical layer management field is included in the message in the initialization and setup phase, the physical layer management field may not indicate the wireless technology used in the initialization and setup phase.

### Implementation 1

The control phase configuration field may indicate a physical layer configuration in the control phase. When a value of the control phase configuration field is a value (for example, a first value) within a first range, it may (directly or indirectly) indicate that a narrowband signal that shares a common clock with UWB is used in the control phase and the report phase, and a multi-millisecond ranging packet that does not carry a synchronization header (for example, the multi-millisecond ranging packet A) is used in the ranging phase. In addition, when the value of the control phase configuration field is the value (for example, the first value) within the first range, it may further indicate a physical layer configuration (for example, a rate, a SYNC length, an SFD sequence, a PHR length, and a symbol-to-chip mapping) of O-QPSK modulation in the control phase. Alternatively, when the value of the control phase configuration field is the value (for example, the first value) within the first range, it directly or indirectly (implicitly) indicates the combination 1 in Table 6. For example, the first range may be 1 to 8, or 1 to 9, or another range. This is not limited in embodiments of this application. The first value may be any value within the first range.

When a value of the control phase configuration field is a second value outside the first range, it may (directly or indirectly) indicate that a UWB packet (for example, the SP0 packet) is used in the control phase and the report phase, and a multi-millisecond ranging packet that carries a synchronization header (for example, the multi-millisecond ranging packet B) is used in the ranging phase. In addition, when the value of the control phase configuration field is the second value outside the first range, it may further indicate that a UWB packet (for example, the SP0 packet) is used in the control phase. Alternatively, when the value of the control phase configuration field is the second value outside the first range, it directly or indirectly indicates the combination 2 in Table 6. For example, the second value may be 14, 15, or a value in 0 to 15 other than the first range. This is not limited in embodiments of this application. Herein, the UWB packet used in the control phase and the report phase may be the SP0 packet. For descriptions of the SP0 packet, refer to the foregoing descriptions. Details are not described herein again.

It may be understood that a modulation scheme of the narrowband signal that shares the common clock with the UWB is O-QPSK modulation.

It may be understood that, in this embodiment of this application, a meaning of an existing control phase configuration field is redefined, and wireless technologies in multiple phases in the control phase, the ranging phase, and the report phase is directly or indirectly indicated based on a value of the control phase configuration field, without adding a new field, thereby reducing signaling overheads.

The report phase configuration field may indicate a physical layer configuration in the report phase. For a value and a meaning of the report phase configuration field, refer to the conventional technology. For example, the value of the report phase configuration field ranges from 1 to 9, indicating nine configurations of O-QPSK in the report phase. A value of 15 indicates that a UWB packet is used in the report phase for reporting, where a PSR in a SYNC field of the UWB packet is 64, an SFD index of the UWB packet is 2, a length of an SFD is 8, the UWB packet does not include an STS, and a data rate is 1.95 Mbps. For example, the SFD index being 2 indicates that an SFD sequence is [-1 -1 -1 +1 -1 -1 +1 -1].

### Implementation 2

The report phase configuration field may indicate a physical layer configuration in the report phase. When a value of the report phase configuration field is a value (for example, a first value) within a first range, it may (directly or indirectly) indicate that a narrowband signal that shares a common clock with ultra-wideband UWB is used in the control phase and the report phase, and a multi-millisecond ranging packet that does not carry a synchronization header (for example, the multi-millisecond ranging packet A) is used in the ranging phase. In addition, when the value of the report phase configuration field is the value (for example, the first value) within the first range, it may further indicate a physical layer configuration (for example, a rate, a SYNC length, an SFD sequence, a PHR length, and a symbol-to-chip mapping) of O-QPSK modulation in the report phase. Alternatively, when the value of the report phase configuration field is the value (for example, the first value) within the first range, it directly or indirectly (implicitly) indicates the combination 1 in Table 6. For example, the first range may be 1 to 8, or 1 to 9, or another range. This is not limited in embodiments of this application. The first value may be any value within the first range.

When a value of the report phase configuration field is a second value outside the first range, it may (directly or indirectly) indicate that a UWB packet (for example, the SP0 packet) is used in the control phase and the report phase, and a multi-millisecond ranging packet that carries a synchronization header (for example, the multi-millisecond ranging packet B) is used in the ranging phase. In addition, when the value of the report phase configuration field is the second value outside the first range, it may further indicate that a UWB packet (for example, the SP0 packet) is used in the report phase. Alternatively, when the value of the report phase configuration field is the second value outside the first range, it directly or indirectly (implicitly) indicates the combination 2 in Table 6. For example, the second value may be 14, 15, or a value in 0 to 15 other than the first range. This is not limited in embodiments of this application. Herein, the UWB packet used in the control phase and the report phase may be the SP0 packet. For descriptions of the SP0 packet, refer to the foregoing descriptions. Details are not described herein again.

It may be understood that a modulation scheme of the narrowband signal that shares the common clock with the UWB is O-QPSK modulation.

It may be understood that, in this embodiment of this application, a meaning of an existing report phase configuration field is redefined, and wireless technologies in multiple phases in the control phase, the ranging phase, and the report phase is directly or indirectly indicated based on a value of the report phase configuration field, without adding a new field, thereby reducing signaling overheads.

The control phase configuration field may indicate a physical layer configuration in the control phase. The control phase configuration field may indicate a physical layer configuration (for example, a rate, a SYNC length, an SFD sequence, a PHR length, and a symbol-to-chip mapping) of O-QPSK modulation in the control phase. For example, when a value of the control phase configuration field ranges from 1 to 9, it indicates nine configurations (for example, a rate, a SYNC length, an SFD sequence, a PHR length, and a symbol-to-chip mapping) of O-QPSK in the control phase. When the value is another value, it indicates reserved.

### Implementation 3

The control phase configuration field may indicate a physical layer configuration in the control phase. The report phase configuration field may indicate a physical layer configuration in the report phase. When a value of the control phase configuration field is a value (for example, a first value) within a first range, it may indicate that a narrowband signal that shares a common clock with UWB is used in the control phase, or indicate a physical layer configuration (for example, a rate, a SYNC length, an SFD sequence, a PHR length, and a symbol-to-chip mapping) of O-QPSK modulation in the control phase. When a value of the control phase configuration field is a second value outside the first range, it may indicate that a UWB packet (for example, the SP0 packet) is used in the control phase. When a value of the report phase configuration field is a value (for example, a third value) within a second range, it may indicate that a narrowband signal that shares a common clock with UWB is used in the report phase, or indicate a physical layer configuration (for example, a rate, a SYNC length, an SFD sequence, a PHR length, and a symbol-to-chip mapping) of O-QPSK modulation in the report phase. When a value of the report phase configuration field is a fourth value outside the second range, it may indicate that a UWB packet (for example, the SP0 packet) is used in the report phase. In this embodiment of this application, a same wireless technology is used in the control phase and the report phase. It may be understood that, the wireless technologies in the control phase, the ranging phase, and the report phase defined in this embodiment of this application are shown in Table 6. Therefore, when the value of the control phase configuration field is the value (for example, the first value) within the first range, and the value of the report phase configuration field is the value (for example, the third value) within the second range, it may indicate the combination 1 in Table 6, for example, a narrowband signal that shares a common clock with UWB in both the control phase and the report phase, and a multi-millisecond ranging packet that does not carry a synchronization header (for example, the multi-millisecond ranging packet A) is used in the ranging phase. When the value of the control phase configuration field is the second value, and the value of the report phase configuration field is the fourth value, it may indicate the combination 2 in Table 6, for example, the SP0 packet is used in the control phase and the report phase, and a multi-millisecond ranging packet that carries a synchronization header (for example, the multi-millisecond ranging packet B) is used in the ranging phase. For example, the first range may be 1 to 8, or 1 to 9, or another range. This is not limited in embodiments of this application. For example, the second range may be 1 to 8, or 1 to 9, or another range. This is not limited in embodiments of this application. The first range and the second range may be the same or may be different. This is not limited in embodiments of this application. The first value may be any value within the first range, and the third value may be any value within the second range.

For example, the second value may be 14, 15, or a value in 0 to 15 other than the first range. This is not limited in embodiments of this application. For example, the third value may be 14, 15, or a value in 0 to 15 other than the second range. This is not limited in embodiments of this application.

Herein, the UWB packet used in the control phase and the report phase may be the SP0 packet. For descriptions of the SP0 packet, refer to the foregoing descriptions. Details are not described herein again.

It may be understood that a modulation scheme of the narrowband signal that shares the common clock with the UWB is O-QPSK modulation.

It may be understood that, in this embodiment of this application, meanings of the control phase configuration field and the report phase configuration field are redefined, and wireless technologies in multiple phases in the control phase, the ranging phase, and the report phase are directly or indirectly indicated based on the values of the control phase configuration field and the report phase configuration field, without adding a new field, thereby reducing signaling overheads.

In a possible implementation, the second communication apparatus receives and processes the physical layer management field. For example, the second communication apparatus interprets/parses the physical layer management field, and determines wireless technologies in the control phase, the ranging phase, and the report phase, to subsequently transmit information by using the corresponding wireless technologies.

In a possible implementation, the method shown in FIG. 13 further includes: The first communication apparatus sends a ranging physical layer configuration (Ranging PHY Config) field, where the ranging physical layer configuration field may include a sequence code index (Sequence Code Index) field. The sequence code index field may indicate a sequence used for a ranging sequence fragment (RSF). Correspondingly, the second communication apparatus receives and processes the ranging physical layer configuration field.

It may be understood that the ranging physical layer configuration field and the physical layer management field may be located in a same frame, or may be located in different frames. This is not limited in embodiments of this application. It may be further understood that, when the ranging physical layer configuration field and the physical layer management field are located in different frames, the first communication apparatus sends the ranging physical layer configuration field after sending the physical layer management field.

In a possible implementation, the ranging physical layer configuration field may be included in the start of ranging message in the initialization and setup phase or the response message in the initialization and setup phase.

FIG. 14 is a diagram of a format of a ranging physical layer configuration field according to an embodiment of this application. As shown in FIG. 14, the ranging physical layer configuration field includes but is not limited to a sequence code index (Sequence Code Index) field. A length of the Sequence Code Index field is 6 bits, and may indicate a sequence used for an RSF. When a value of the Sequence Code Index field ranges from 9 to 24, it indicates sequences (for example, Ipatov sequences) respectively numbered 9 to 24 with a length of 127. When a value of the Sequence Code Index field ranges from 25 to 32, it indicates sequences (for example, Ipatov sequences) respectively numbered 25 to 32 with a length of 91. When a value of the Sequence Code Index field ranges from 33 to 48, it indicates sequences respectively numbered 33 to 48 with a length of 128.

In a possible implementation, when a UWB packet (for example, the SP0 packet) is used in the control phase and the report phase, and a multi-millisecond ranging packet that carries a synchronization header (for example, the multi-millisecond ranging packet B) is used in the ranging phase, or when the value of the control phase configuration field is the second value as shown in Implementation 1, or when the value of the report phase configuration field is the second value as shown in Implementation 2, or when the value of the control phase configuration field is the second value and the value of the report phase configuration field is the third value as shown in Implementation 3, the Sequence Code Index field may further indicate a preamble sequence used for the UWB packet and a preamble sequence used for the synchronization header in the multi-millisecond ranging packet in the ranging phase.

For example, for the UWB packet (for example, the SP0 packet) in the control phase and the report phase, when the value of the Sequence Code Index field ranges from 25 to 32, it indicates that the UWB packet uses sequences respectively numbered from 25 to 32 with a length of 91 (for example, Ipatov sequences). When the value of the Sequence Code Index field is another value, it indicates that the UWB packet uses sequences (for example, Ipatov sequences) respectively numbered 25 + (Sequence Code Index) MOD 8 with a length of 91. For example, for the synchronization header (SHR) in the multi-millisecond ranging packet, when the value of the Sequence Code Index field ranges from 9 to 24, it indicates that the SHR uses sequences (for example, Ipatov sequences) respectively numbered 9 to 24 with a length of 127; when the value of the Sequence Code Index field ranges from 25 to 32, it indicates that the SHR uses sequences (for example, Ipatov sequences) respectively numbered 25 to 32 with a length of 91; or when the value of the Sequence Code Index field is another value, it indicates that the SHR uses sequences (for example, Ipatov sequences) respectively numbered 25 + (Sequence Code Index) MOD 8 with a length of 91.

The symbol "MOD" represents a modulo operation.

In this embodiment of this application, it is constrained that a same wireless technology is used in the control phase and the report phase, and it is constrained that the combinations of the wireless technologies used in the ranging session include two combinations (as shown in Table 6). Physical layer configurations for the two combinations (that is, the combination 1 and the combination 2 in Table 6) are performed by redefining an existing physical layer management field. This can not only improve the physical layer configurations in the ranging session, for the two ranging parties to align physical layer related parameters, thereby supporting completion of the ranging procedure, and improving ranging efficiency and reliability, but also reduce signaling overheads, without adding a new field.

The foregoing content describes in detail the methods provided in this application. To facilitate implementation of the foregoing solutions in embodiments of this application, embodiments of this application further provide corresponding apparatuses or devices.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The communication apparatus in embodiments of this application is described below in detail with reference to FIG. 15 to FIG. 17.

FIG. 15 is a diagram of a structure of a communication apparatus according to an embodiment of this application. As shown in FIG. 15, the communication apparatus includes a transceiver module 10 and a processing module 20. The transceiver module 10 may implement a corresponding communication function, and the processing module 20 is configured to perform data processing. For example, the transceiver module 10 may also be referred to as a communication interface, a communication module, or the like.

In some embodiments of this application, the communication apparatus may be the first communication apparatus shown above. To be specific, the communication apparatus shown in FIG. 15 may be configured to perform the steps, the functions, or the like performed by the first communication apparatus in the foregoing method embodiments. For example, the communication apparatus may be the first communication apparatus, or may be a chip, a functional module, or the like disposed in the first communication apparatus. This is not limited in embodiments of this application. The transceiver module 10 is configured to perform a receiving/sending-related operation of the first communication apparatus in the foregoing method embodiments, and the processing module 20 is configured to perform a processing-related operation of the first communication apparatus in the foregoing method embodiments.

In a design, the processing module 20 is configured to generate a common physical layer configuration field, where the common physical layer configuration field includes a first field, and the first field indicates a combination of wireless technologies used in multiple phases in an initialization and setup phase, a control phase, a ranging phase, and a report phase; and the transceiver module 10 is configured to send the common physical layer configuration field.

It may be understood that the transceiver module 10 may send the common physical layer configuration field to another communication apparatus, or the transceiver module 10 outputs the common physical layer configuration field from the processing module 20 to another component or another functional module in the communication apparatus. Related descriptions of outputting other information by the transceiver air interface are similar. Details are not described below again.

For example, the transceiver module 10 is further configured to send or receive a physical layer management field, where the physical layer management field includes a control phase configuration field and a report phase configuration field. The control phase configuration field indicates a physical layer configuration of O-QPSK modulation for a narrowband signal that shares a common clock with UWB in the control phase. The report phase configuration field indicates a physical layer configuration of O-QPSK modulation for a narrowband signal that shares a common clock with UWB in the report phase.

For example, a length of the first field is 1 bit, 2 bits, or 3 bits.

For example, the combination of the wireless technologies used in the multiple phases includes multiple items of the following: a narrowband signal that does not share a common clock with UWB or a narrowband signal that shares a common clock with UWB is used in the initialization and setup phase; the narrowband signal that shares the common clock with the UWB is used in the control phase or a UWB packet is used in the control phase; a multi-millisecond ranging packet that carries a synchronization header or a multi-millisecond ranging packet that does not carry a synchronization header is used in the ranging phase; and the narrowband signal that shares the common clock with the UWB is used in the report phase or a UWB packet is used in the report phase. A PPDU format of the UWB packet is an STS packet configuration 0.

For example, the common physical layer configuration field further includes a second field. The second field indicates whether the multi-millisecond ranging packet in the ranging phase includes the synchronization header.

For example, the common physical layer configuration field further includes a third field. The third field indicates a preamble sequence used for the UWB packet in the control phase and/or the report phase. Alternatively, the third field indicates a preamble sequence used for the UWB packet in the control phase and/or the report phase, and a preamble sequence used for the synchronization header in the multi-millisecond ranging packet in the ranging phase.

For example, the UWB packet meets one or more of the following conditions: a data rate is 1.95 Mbps, a synchronization field includes 64 preamble symbols, an SFD sequence is [-1 -1 -1 +1 -1 -1 +1 -1], or a length of an SFD field is 8.

For example, a same wireless technology is used in the control phase and the report phase.

For example, the common physical layer configuration field is included in any one of the following messages: an SOR message in the initialization and setup phase, a response message in the initialization and setup phase, a poll message in the control phase, a response message in the control phase, or a message in the report phase.

For example, the common physical layer configuration field is included in the SOR message in the initialization and setup phase, and content indicated by the common physical layer configuration field is used in one or more ranging cycles after the initialization and setup phase. The common physical layer configuration field is included in the response message in the initialization and setup phase, and content indicated by the common physical layer configuration field is a suggested parameter from a responder for one or more ranging cycles after the initialization and setup phase.

For example, the common physical layer configuration field is included in the poll message in the control phase, and content indicated by the first field is not used, and both content indicated by the second field and content indicated by the third field are used in a ranging cycle in which the common physical layer configuration field is located; or content indicated by the first field is used in a next ranging cycle of a ranging cycle in which the common physical layer configuration field is located, and both content indicated by the second field and content indicated by the third field are used in the ranging cycle in which the common physical layer configuration field is located; or none of content indicated by the common physical layer configuration field is used; or content indicated by the first field is a suggested parameter for a next ranging cycle of a ranging cycle in which the common physical layer configuration field is located, and neither content indicated by the second field nor content indicated by the third field is used.

For example, the common physical layer configuration field is included in the response message in the control phase or the message in the report phase, and content indicated by the first field is not used, and both content indicated by the second field and content indicated by the third field are suggested parameters for a next ranging cycle of a ranging cycle in which the common physical layer configuration field is located; or content indicated by the common physical layer configuration field is a suggested parameter for a next ranging cycle of a ranging cycle in which the common physical layer configuration field is located; or none of content indicated by the common physical layer configuration field is used; or content indicated by the first field is a suggested parameter for a next ranging cycle of a ranging cycle in which the common physical layer configuration field is located, and neither content indicated by the second field nor content indicated by the third field is used.

In this embodiment of this application, for descriptions of the common physical layer configuration field, the combination of the wireless technologies used in the multiple phases, the first field, the second field, the third field, the physical layer management field, and the like, refer to the descriptions in the foregoing method embodiment (as shown in FIG. 8). Details are not described herein again.

It may be understood that specific descriptions of the transceiver module and the processing module shown in this embodiment of this application are merely examples. For specific functions, steps, or the like of the transceiver module and the processing module, refer to the foregoing method embodiment (as shown in FIG. 8). Details are not described herein again. In addition, for technical effects of this embodiment of this application, refer to the technical effects in the foregoing method embodiments. For brevity, details are not described herein again.

In another design, the processing module 20 is configured to generate a common physical layer configuration field, where the common physical layer configuration field includes a second field, and the second field indicates whether a multi-millisecond ranging packet in a ranging phase includes a synchronization header; and the transceiver module 10 is configured to send the common physical layer configuration field.

For example, the common physical layer configuration field further includes a third field. The third field indicates a preamble sequence used for a UWB packet in a control phase and a preamble sequence used for a UWB packet in a report phase, and/or a preamble sequence used for the synchronization header in the multi-millisecond ranging packet in the ranging phase. A configuration of the UWB packet is an STS packet configuration 0.

For example, the common physical layer configuration field is included in any one of the following messages: an SOR message in an initialization and setup phase, a response message in the initialization and setup phase, a poll message in the control phase, a response message in the control phase, or a message in the report phase.

For example, the common physical layer configuration field is included in the SOR message in the initialization and setup phase, and content indicated by the common physical layer configuration field is used in one or more ranging cycles after the initialization and setup phase. The common physical layer configuration field is included in the response message in the initialization and setup phase, and content indicated by the common physical layer configuration field is a suggested parameter from a responder for one or more ranging cycles after the initialization and setup phase.

For example, the common physical layer configuration field is included in the poll message in the control phase, and content indicated by the common physical layer configuration field is not used; or content indicated by the common physical layer configuration field is used in a ranging cycle in which the common physical layer configuration field is located.

For example, the common physical layer configuration field is included in the response message in the control phase or the message in the report phase, and content indicated by the common physical layer configuration field is not used; or content indicated by the common physical layer configuration field is a suggested parameter for a next ranging cycle of a ranging cycle in which the common physical layer configuration field is located.

In this embodiment of this application, for descriptions of the common physical layer configuration field, the second field, the third field, the synchronization header, and the like, refer to the descriptions in the foregoing method embodiment (as shown in FIG. 8). Details are not described herein again.

It may be understood that specific descriptions of the transceiver module and the processing module shown in this embodiment of this application are merely examples. For specific functions, steps, or the like of the transceiver module and the processing module, refer to the foregoing method embodiment (as shown in FIG. 8). Details are not described herein again. In addition, for technical effects of this embodiment of this application, refer to the technical effects in the foregoing method embodiments. For brevity, details are not described herein again.

In another design, the processing module 20 is configured to generate a first frame, where the first frame includes a physical layer management field, the physical layer management field includes a control phase configuration field and a report phase configuration field, the control phase configuration field and the report phase configuration field jointly indicate a combination of wireless technologies used in a ranging session, the ranging session includes a control phase and a ranging phase, a multi-millisecond ranging packet used in the ranging phase does not include a synchronization header, a narrowband signal that shares a common clock with UWB is used in the control phase or a first UWB packet is used in the control phase, and the first UWB packet includes a synchronization header; and the transceiver module 10 is configured to send the first frame.

For example, the combination of the wireless technologies used in the ranging session further includes: a narrowband signal that does not share a common clock with UWB or a narrowband signal that shares a common clock with UWB is used in an initialization and setup phase of the ranging session; and a narrowband signal that shares a common clock with UWB is used in a report phase of the ranging session or a second UWB packet is used in a report phase of the ranging session.

For example, when a value of the control phase configuration field is 14 or 15, or a value of the report phase configuration field is 15, the first frame further includes a third field. The third field indicates a preamble sequence used for the first UWB packet in the control phase and/or the second UWB packet in the report phase.

For example, a PPDU format of the second UWB packet is an STS packet configuration 0.

For example, a PPDU format of the first UWB packet includes only the synchronization header; or the first UWB packet includes two UWB packets, where a PPDU format of one UWB packet includes only the synchronization header, and a PPDU format of the other UWB packet is the STS packet configuration 0.

For example, the first frame is any one of the following messages: an SOR message in the initialization and setup phase, a response message in the initialization and setup phase, a poll message in the control phase, a response message in the control phase, or a message in the report phase.

For example, the first frame is the SOR message in the initialization and setup phase, and content indicated by the physical layer management field and/or content indicated by the third field are/is used in one or more ranging cycles after the initialization and setup phase. The first frame is the response message in the initialization and setup phase, and content indicated by the physical layer management field and/or content indicated by the third field are/is suggested parameters/a suggested parameter from a responder for one or more ranging cycles after the initialization and setup phase.

For example, the first frame is the poll message in the control phase; and content indicated by the physical layer management field is not used, and content indicated by the third field is used in a ranging cycle in which the first frame is located; or content indicated by the physical layer management field is used in a next ranging cycle of a ranging cycle in which the first frame is located, and content indicated by the third field is used in the ranging cycle in which the first frame is located; or neither content indicated by the physical layer management field nor content indicated by the third field is used; or content indicated by the physical layer management field is a suggested parameter for a next ranging cycle of a ranging cycle in which the first frame is located, and content indicated by the third field is not used.

For example, the first frame is the response message in the control phase or the message in the report phase; and content indicated by the physical layer management field is not used, and content indicated by the third field is a suggested parameter for a next ranging cycle of a ranging cycle in which the first frame is located; or both content indicated by the physical layer management field and content indicated by the third field are suggested parameters for a next ranging cycle of a ranging cycle in which the first frame is located; or neither content indicated by the physical layer management field nor content indicated by the third field is used; or content indicated by the physical layer management field is a suggested parameter for a next ranging cycle of a ranging cycle in which the first frame is located, and content indicated by the third field is not used.

In this embodiment of this application, for descriptions of the first frame, the physical layer management field, the combination of the wireless technologies used in the ranging session, the third field, and the like, refer to the descriptions in the foregoing method embodiment (as shown in FIG. 10). Details are not described herein again.

It may be understood that specific descriptions of the transceiver module and the processing module shown in this embodiment of this application are merely examples. For specific functions, steps, or the like of the transceiver module and the processing module, refer to the foregoing method embodiment (as shown in FIG. 10). Details are not described herein again. In addition, for technical effects of this embodiment of this application, refer to the technical effects in the foregoing method embodiments. For brevity, details are not described herein again.

Still refer to FIG. 15. In some other embodiments of this application, the communication apparatus may be the second communication apparatus shown above. To be specific, the communication apparatus shown in FIG. 15 may be configured to perform the steps, the functions, or the like performed by the second communication apparatus in the foregoing method embodiments. For example, the communication apparatus may be the second communication apparatus, or may be a chip, a functional module, or the like disposed in the second communication apparatus. This is not limited in embodiments of this application. The transceiver module 10 is configured to perform a receiving/sending-related operation of the second communication apparatus in the foregoing method embodiments, and the processing module 20 is configured to perform a processing-related operation of the second communication apparatus in the foregoing method embodiments.

In a design, the transceiver module 10 is configured to receive a common physical layer configuration field, where the common physical layer configuration field includes a first field, and the first field indicates a combination of wireless technologies used in multiple phases in an initialization and setup phase, a control phase, a ranging phase, and a report phase; and the processing module 20 is configured to process the common physical layer configuration field.

It may be understood that the transceiver module 10 may receive the common physical layer configuration field from another communication apparatus, or the transceiver module 10 may input the common physical layer configuration field from another component or another functional module in the communication apparatus. Related descriptions of inputting other information by the transceiver module are similar. Details are not described below again.

For example, the transceiver module 10 is further configured to receive or send a physical layer management field, where the physical layer management field includes a control phase configuration field and a report phase configuration field. The control phase configuration field indicates a physical layer configuration of O-QPSK modulation for a narrowband signal that shares a common clock with UWB in the control phase. The report phase configuration field indicates a physical layer configuration of O-QPSK modulation for a narrowband signal that shares a common clock with UWB in the report phase.

For example, a length of the first field is 1 bit, 2 bits, or 3 bits.

For example, the combination of the wireless technologies used in the multiple phases includes multiple items of the following: a narrowband signal that does not share a common clock with UWB or a narrowband signal that shares a common clock with UWB is used in the initialization and setup phase; the narrowband signal that shares the common clock with the UWB is used in the control phase or a UWB packet is used in the control phase; a multi-millisecond ranging packet that carries a synchronization header or a multi-millisecond ranging packet that does not carry a synchronization header is used in the ranging phase; and the narrowband signal that shares the common clock with the UWB is used in the report phase or a UWB packet is used in the report phase. A PPDU format of the UWB packet is an STS packet configuration 0.

For example, the common physical layer configuration field further includes a second field. The second field indicates whether the multi-millisecond ranging packet in the ranging phase includes the synchronization header.

For example, the common physical layer configuration field further includes a third field. The third field indicates a preamble sequence used for the UWB packet in the control phase and/or a preamble sequence used for the UWB packet in the report phase. Alternatively, the third field indicates a preamble sequence used for the UWB packet in the control phase and/or a preamble sequence used for the UWB packet in the report phase, and a preamble sequence used for the synchronization header in the multi-millisecond ranging packet in the ranging phase.

For example, the UWB packet meets one or more of the following conditions: a data rate is 1.95 Mbps, a synchronization field includes 64 preamble symbols, an SFD sequence is [-1 -1 -1 +1 -1 -1 +1 -1], or a length of an SFD field is 8.

For example, a same wireless technology is used in the control phase and the report phase.

For example, the common physical layer configuration field is included in any one of the following messages: an SOR message in the initialization and setup phase, a response message in the initialization and setup phase, a poll message in the control phase, a response message in the control phase, or a message in the report phase.

For example, the common physical layer configuration field is included in the SOR message in the initialization and setup phase, and content indicated by the common physical layer configuration field is used in one or more ranging cycles after the initialization and setup phase. The common physical layer configuration field is included in the response message in the initialization and setup phase, and content indicated by the common physical layer configuration field is a suggested parameter from a responder for one or more ranging cycles after the initialization and setup phase.

For example, the common physical layer configuration field is included in the poll message in the control phase, and content indicated by the first field is not used, and both content indicated by the second field and content indicated by the third field are used in a ranging cycle in which the common physical layer configuration field is located; or content indicated by the first field is used in a next ranging cycle of a ranging cycle in which the common physical layer configuration field is located, and both content indicated by the second field and content indicated by the third field are used in the ranging cycle in which the common physical layer configuration field is located; or none of content indicated by the common physical layer configuration field is used; or content indicated by the first field is a suggested parameter for a next ranging cycle of a ranging cycle in which the common physical layer configuration field is located, and neither content indicated by the second field nor content indicated by the third field is used.

For example, the common physical layer configuration field is included in the response message in the control phase or the message in the report phase, and content indicated by the first field is not used, and both content indicated by the second field and content indicated by the third field are suggested parameters for a next ranging cycle of a ranging cycle in which the common physical layer configuration field is located; or content indicated by the common physical layer configuration field is a suggested parameter for a next ranging cycle of a ranging cycle in which the common physical layer configuration field is located; or none of content indicated by the common physical layer configuration field is used; or content indicated by the first field is a suggested parameter for a next ranging cycle of a ranging cycle in which the common physical layer configuration field is located, and neither content indicated by the second field nor content indicated by the third field is used.

In this embodiment of this application, for descriptions of the common physical layer configuration field, the combination of the wireless technologies used in the multiple phases, the first field, the second field, the third field, the physical layer management field, and the like, refer to the descriptions in the foregoing method embodiment (as shown in FIG. 8). Details are not described herein again.

It may be understood that specific descriptions of the transceiver module and the processing module shown in this embodiment of this application are merely examples. For specific functions, steps, or the like of the transceiver module and the processing module, refer to the foregoing method embodiment (as shown in FIG. 8). Details are not described herein again. In addition, for technical effects of this embodiment of this application, refer to the technical effects in the foregoing method embodiments. For brevity, details are not described herein again.

In another design, the transceiver module 10 is configured to receive a common physical layer configuration field, where the common physical layer configuration field includes a second field, and the second field indicates whether a multi-millisecond ranging packet in a ranging phase includes a synchronization header; and the processing module 20 is configured to process the common physical layer configuration field.

For example, the common physical layer configuration field further includes a third field. The third field indicates a preamble sequence used for a UWB packet in a control phase and a preamble sequence used for a UWB packet in a report phase, and/or a preamble sequence used for the synchronization header in the multi-millisecond ranging packet in the ranging phase. A configuration of the UWB packet is an STS packet configuration 0.

For example, the common physical layer configuration field is included in any one of the following messages: an SOR message in an initialization and setup phase, a response message in the initialization and setup phase, a poll message in the control phase, a response message in the control phase, or a message in the report phase.

For example, the common physical layer configuration field is included in the SOR message in the initialization and setup phase, and content indicated by the common physical layer configuration field is used in one or more ranging cycles after the initialization and setup phase. The common physical layer configuration field is included in the response message in the initialization and setup phase, and content indicated by the common physical layer configuration field is a suggested parameter from a responder for one or more ranging cycles after the initialization and setup phase.

For example, the common physical layer configuration field is included in the poll message in the control phase, and content indicated by the common physical layer configuration field is not used; or content indicated by the common physical layer configuration field is used in a ranging cycle in which the common physical layer configuration field is located.

For example, the common physical layer configuration field is included in the response message in the control phase or the message in the report phase, and content indicated by the common physical layer configuration field is not used; or content indicated by the common physical layer configuration field is a suggested parameter for a next ranging cycle of a ranging cycle in which the common physical layer configuration field is located.

In this embodiment of this application, for descriptions of the common physical layer configuration field, the second field, the third field, the synchronization header, and the like, refer to the descriptions in the foregoing method embodiment (as shown in FIG. 8). Details are not described herein again.

It may be understood that specific descriptions of the transceiver module and the processing module shown in this embodiment of this application are merely examples. For specific functions, steps, or the like of the transceiver module and the processing module, refer to the foregoing method embodiment (as shown in FIG. 8). Details are not described herein again. In addition, for technical effects of this embodiment of this application, refer to the technical effects in the foregoing method embodiments. For brevity, details are not described herein again.

In another design, the transceiver module 10 is configured to receive a first frame, where the first frame includes a physical layer management field, the physical layer management field includes a control phase configuration field and a report phase configuration field, the control phase configuration field and the report phase configuration field jointly indicate a combination of wireless technologies used in a ranging session, the ranging session includes a control phase and a ranging phase, a multi-millisecond ranging packet used in the ranging phase does not include a synchronization header, a narrowband signal that shares a common clock with UWB is used in the control phase or a first UWB packet is used in the control phase, and the first UWB packet includes a synchronization header; and the processing module 20 is configured to process the first frame.

For example, the combination of the wireless technologies used in the ranging session further includes: a narrowband signal that does not share a common clock with UWB or a narrowband signal that shares a common clock with UWB is used in an initialization and setup phase of the ranging session; and a narrowband signal that shares a common clock with UWB is used in a report phase of the ranging session or a second UWB packet is used in a report phase of the ranging session.

For example, when a value of the control phase configuration field is 14 or 15, or a value of the report phase configuration field is 15, the first frame further includes a third field. The third field indicates a preamble sequence used for the first UWB packet in the control phase and/or a preamble sequence used for the second UWB packet in the report phase.

For example, a PPDU format of the second UWB packet is an STS packet configuration 0.

For example, a PPDU format of the first UWB packet includes only the synchronization header; or the first UWB packet includes two UWB packets, where a PPDU format of one UWB packet includes only the synchronization header, and a PPDU format of the other UWB packet is the STS packet configuration 0.

For example, the first frame is any one of the following messages: an SOR message in the initialization and setup phase, a response message in the initialization and setup phase, a poll message in the control phase, a response message in the control phase, or a message in the report phase.

For example, the first frame is the SOR message in the initialization and setup phase, and content indicated by the physical layer management field and/or content indicated by the third field are/is used in one or more ranging cycles after the initialization and setup phase. The first frame is the response message in the initialization and setup phase, and content indicated by the physical layer management field and/or content indicated by the third field are/is suggested parameters/a suggested parameter from a responder for one or more ranging cycles after the initialization and setup phase.

For example, the first frame is the poll message in the control phase; and content indicated by the physical layer management field is not used, and content indicated by the third field is used in a ranging cycle in which the first frame is located; or content indicated by the physical layer management field is used in a next ranging cycle of a ranging cycle in which the first frame is located, and content indicated by the third field is used in the ranging cycle in which the first frame is located; or neither content indicated by the physical layer management field nor content indicated by the third field is used; or content indicated by the physical layer management field is a suggested parameter for a next ranging cycle of a ranging cycle in which the first frame is located, and content indicated by the third field is not used.

For example, the first frame is the response message in the control phase or the message in the report phase; and content indicated by the physical layer management field is not used, and content indicated by the third field is a suggested parameter for a next ranging cycle of a ranging cycle in which the first frame is located; or both content indicated by the physical layer management field and content indicated by the third field are suggested parameters for a next ranging cycle of a ranging cycle in which the first frame is located; or neither content indicated by the physical layer management field nor content indicated by the third field is used; or content indicated by the physical layer management field is a suggested parameter for a next ranging cycle of a ranging cycle in which the first frame is located, and content indicated by the third field is not used.

In this embodiment of this application, for descriptions of the first frame, the physical layer management field, the combination of the wireless technologies used in the ranging session, the third field, and the like, refer to the descriptions in the foregoing method embodiment (as shown in FIG. 10). Details are not described herein again.

It may be understood that specific descriptions of the transceiver module and the processing module shown in this embodiment of this application are merely examples. For specific functions, steps, or the like of the transceiver module and the processing module, refer to the foregoing method embodiment (as shown in FIG. 10). Details are not described herein again. In addition, for technical effects of this embodiment of this application, refer to the technical effects in the foregoing method embodiments. For brevity, details are not described herein again.

The foregoing describes the communication apparatus in embodiments of this application, and the following describes a possible product form of the communication apparatus. It should be understood that a product in any form having the functions of the communication apparatus described in FIG. 15 falls within the protection scope of embodiments of this application. It should be further understood that the following descriptions are merely examples, and do not limit a product form of the communication apparatus in embodiments of this application.

In a possible implementation, in the communication apparatus shown in FIG. 15, the processing module 20 may be one or more processors, and the transceiver module 10 may be a transceiver, or the transceiver module 10 may be a sending module and a receiving module, the sending module may be a transmitter, and the receiving module may be a receiver. The sending module and the receiving module are integrated into one component, for example, a transceiver. In embodiments of this application, the processor and the transceiver may be coupled, or the like. A connection manner between the processor and the transceiver is not limited in embodiments of this application. In a process of performing the foregoing method, a process of sending information (for example, sending a common physical layer configuration field or a first frame) in the foregoing method may be understood as a process of outputting the information by the processor. When outputting the information, the processor outputs the information to the transceiver, so that the transceiver transmits the information. After the information is outputted by the processor, other processing may further need to be performed on the information before the information arrives at the transceiver. Similarly, a process of receiving information (for example, receiving a common physical layer configuration field or a first frame) in the foregoing method may be understood as a process of receiving the input information by the processor. When the processor receives the input information, the transceiver receives the information, and inputs the information to the processor. Further, after the transceiver receives the information, other processing may need to be performed on the information before the information is input to the processor.

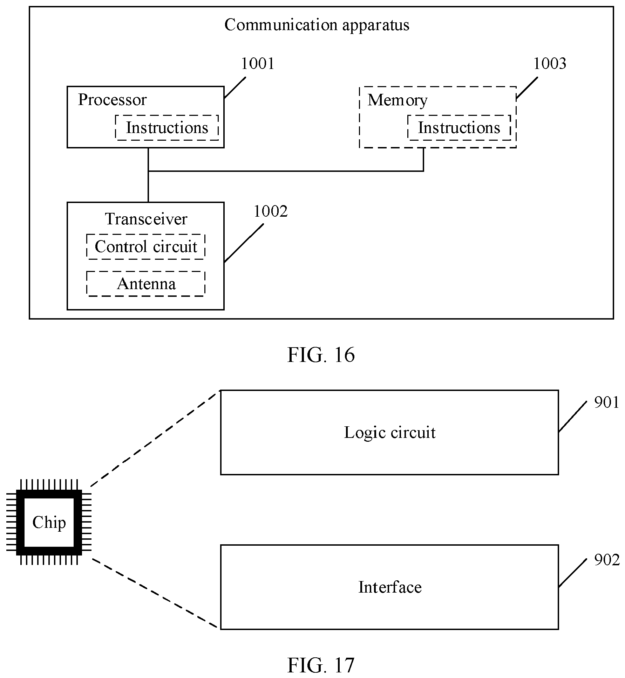

FIG. 16 is a diagram of another structure of a communication apparatus according to an embodiment of this application. The communication apparatus may be a first communication apparatus or a second communication apparatus, or may be a chip in the first communication apparatus or the second communication apparatus. FIG. 16 shows only main components of the communication apparatus. In addition to a processor 1001, the communication apparatus may further include a transceiver 1002, a memory 1003, and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, a keyboard, is mainly configured to: receive data entered by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

The processor 1001, the transceiver 1002, and the memory 1003 may be connected through a communication bus.

For example, when the communication apparatus is configured to perform the steps, the method, or the functions performed by the first communication apparatus in the foregoing method embodiment shown in FIG. 8, the processor 1001 may be configured to perform step S101 in FIG. 8, and/or configured to perform another process of the technology described in this specification; and the transceiver 1002 may be configured to perform step S102 in FIG. 8, and/or configured to perform another process of the technology described in this specification.

For example, when the communication apparatus is configured to perform the steps, the method, or the functions performed by the second communication apparatus in the foregoing method embodiment shown in FIG. 8, the processor 1001 may be configured to perform step S103 in FIG. 8, and/or configured to perform another process of the technology described in this specification; and the transceiver 1002 may be configured to receive the common physical layer configuration field, and/or configured to perform another process of the technology described in this specification.

For example, when the communication apparatus is configured to perform the steps, the method, or the functions performed by the first communication apparatus in the foregoing method embodiment shown in FIG. 10, the processor 1001 may be configured to perform step S201 in FIG. 10, and/or configured to perform another process of the technology described in this specification; and the transceiver 1002 may be configured to perform step S202 in FIG. 10, and/or configured to perform another process of the technology described in this specification.

For example, when the communication apparatus is configured to perform the steps, the method, or the functions performed by the second communication apparatus in the foregoing method embodiment shown in FIG. 10, the processor 1001 may be configured to perform step S203 in FIG. 10, and/or configured to perform another process of the technology described in this specification; and the transceiver 1002 may be configured to receive the first frame, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program runs on the processor 1001, to enable the communication apparatus to perform the methods described in the foregoing method embodiments. The computer program may be embedded in the processor 1001. In this case, the processor 1001 may be implemented by hardware.

In an implementation, the communication apparatus may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, such as a complementary metal oxide semiconductor (complementary metal oxide semiconductor, CMOS), an N-channel metal oxide semiconductor (N-channel Metal oxide semiconductor, NMOS), a P-channel metal oxide semiconductor (P-channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may alternatively include more components than those shown in FIG. 16, or the like. This is not limited in this embodiment of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 15, the processing module 20 may be one or more logic circuits, and the transceiver module 10 may be an input/output interface that is also referred to as a communication interface, an interface circuit, an interface, or the like. Alternatively, the transceiver module 10 may be a sending module and a receiving module. The sending module may be an output interface, and the receiving module may be an input interface. The sending module and the receiving module are integrated into one module, for example, an input/output interface. FIG. 17 is a diagram of still another structure of a communication apparatus according to an embodiment of this application. As shown in FIG. 17, the communication apparatus shown in FIG. 17 includes a logic circuit 901 and an interface 902. That is, the processing module 20 may be implemented via the logic circuit 901, and the transceiver module 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 17 shows an example in which the communication apparatus is a chip. The chip includes the logic circuit 901 and the interface 902.

In this embodiment of this application, the logic circuit and the interface may be coupled to each other. A specific connection manner between the logic circuit and the interface is not limited in embodiments of this application.

For example, when the communication apparatus is configured to perform the method, the functions, or the steps performed by the first communication apparatus in the foregoing method embodiment, the logic circuit 901 is configured to generate a common physical layer configuration field, where the common physical layer configuration field includes a first field, and the first field indicates a combination of wireless technologies used in multiple phases in an initialization and setup phase, a control phase, a ranging phase, and a report phase; and the interface 902 is configured to output the common physical layer configuration field.

For example, when the communication apparatus is configured to perform the method, the functions, or the steps performed by the second communication apparatus in the foregoing method embodiment, the interface 902 is configured to input a common physical layer configuration field, where the common physical layer configuration field includes a first field, and the first field indicates a combination of wireless technologies used in multiple phases in an initialization and setup phase, a control phase, a ranging phase, and a report phase; and the logic circuit 901 is configured to process the common physical layer configuration field.

For example, when the communication apparatus is configured to perform the method, the functions, or the steps performed by the first communication apparatus in the foregoing method embodiment, the logic circuit 901 is configured to generate a common physical layer configuration field, where the common physical layer configuration field includes a second field, and the second field indicates whether a multi-millisecond ranging packet in a ranging phase includes a synchronization header; and the interface 902 is configured to output the common physical layer configuration field.

For example, when the communication apparatus is configured to perform the method, the functions, or the steps performed by the second communication apparatus in the foregoing method embodiment, the interface 902 is configured to input a common physical layer configuration field, where the common physical layer configuration field includes a second field, and the second field indicates whether a multi-millisecond ranging packet in a ranging phase includes a synchronization header; and the logic circuit 901 is configured to process the common physical layer configuration field.

In this embodiment of this application, for specific descriptions of the common physical layer configuration field, the first field, the second field, the combination of the wireless technologies used in the multiple phases, and the like, refer to the foregoing method embodiment shown in FIG. 8. Details are not described herein again.

For example, when the communication apparatus is configured to perform the method, the functions, or the steps performed by the first communication apparatus in the foregoing method embodiment, the logic circuit 901 is configured to generate a first frame, where the first frame includes a physical layer management field, the physical layer management field includes a control phase configuration field and a report phase configuration field, the control phase configuration field and the report phase configuration field jointly indicate a combination of wireless technologies used in a ranging session, the ranging session includes a control phase and a ranging phase, a multi-millisecond ranging packet used in the ranging phase does not include a synchronization header, a narrowband signal that shares a common clock with UWB is used in the control phase or a first UWB packet is used in the control phase, and the first UWB packet includes a synchronization header; and the interface 902 is configured to output the first frame.

For example, when the communication apparatus is configured to perform the method, the functions, or the steps performed by the second communication apparatus in the foregoing method embodiment, the interface 902 is configured to input a first frame, where the first frame includes a physical layer management field, the physical layer management field includes a control phase configuration field and a report phase configuration field, the control phase configuration field and the report phase configuration field jointly indicate a combination of wireless technologies used in a ranging session, the ranging session includes a control phase and a ranging phase, a multi-millisecond ranging packet used in the ranging phase does not include a synchronization header, a narrowband signal that shares a common clock with UWB is used in the control phase or a first UWB packet is used in the control phase, and the first UWB packet includes a synchronization header; and the logic circuit 901 is configured to process the first frame.

In this embodiment of this application, for specific descriptions of the first frame, the physical layer management field, the combination of the wireless technologies used in the ranging session, a third field, and the like, refer to the method embodiment shown in FIG. 10. Details are not described herein again.

It may be understood that the communication apparatus described in this embodiment of this application may implement the method provided in embodiments of this application in a form of hardware, or may implement the method provided in embodiments of this application in a form of software. This is not limited in embodiments of this application.

For a specific implementation of the embodiment shown in FIG. 17, refer to the foregoing embodiments. Details are not described herein again.

Embodiments of this application further provide a wireless communication system. The wireless communication system includes a first communication apparatus and a second communication apparatus. The first communication apparatus and the second communication apparatus may be configured to perform the method in any one of the foregoing method embodiments.

In addition, this application further provides a computer program. The computer program is for implementing operations and/or processing performed by the first communication apparatus in the methods provided in this application.

This application further provides a computer program. The computer program is for implementing operations and/or processing performed by the second communication apparatus in the methods provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program runs on a computer, operations and/or processing performed by the first communication apparatus in the methods provided in this application are/is performed.

This application further provides a computer program product. The computer program product includes computer code or a computer program. When the computer code or the computer program runs on a computer, operations and/or processing performed by the second communication apparatus in the methods provided in this application are/is performed.

In the several embodiments provided in this application, it should be understood that the disclosed system, apparatuses, and methods may be implemented in other manners. For example, the described apparatus embodiments are merely examples. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, that is, may be located in one position, or may be distributed on multiple network units. Some or all of the units may be selected based on an actual requirement to implement the technical effects of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer configuration method for ultra-wideband ranging, comprising:
generating a common physical layer configuration field, wherein the common physical layer configuration field comprises a first field, and the first field indicates a combination of wireless technologies used in multiple phases in an initialization and setup phase, a control phase, a ranging phase, and a report phase; and
sending the common physical layer configuration field.

2. A physical layer configuration method for ultra-wideband ranging, comprising:
receiving a common physical layer configuration field, wherein the common physical layer configuration field comprises a first field, and the first field indicates a combination of wireless technologies used in multiple phases in an initialization and setup phase, a control phase, a ranging phase, and a report phase; and
processing the common physical layer configuration field.

3. The method according to claim 1 or 2, wherein a length of the first field is 1 bit, 2 bits, or 3 bits.

4. The method according to any one of claims 1 to 3, wherein the combination of the wireless technologies used in the multiple phases comprises multiple items of the following:
a narrowband signal that does not share a common clock with ultra-wideband UWB or a narrowband signal that shares a common clock with UWB is used in the initialization and setup phase;
a narrowband signal that shares a common clock with UWB is used in the control phase or a UWB packet is used in the control phase;
a multi-millisecond ranging packet that carries a synchronization header or a multi-millisecond ranging packet that does not carry a synchronization header is used in the ranging phase; and
a narrowband signal that shares a common clock with UWB is used in the report phase or a UWB packet is used in the report phase, wherein
a physical layer protocol data unit PPDU format of the UWB packet is a scrambled timestamp sequence STS packet configuration 0.

5. The method according to claim 4, wherein the common physical layer configuration field further comprises a second field; and
the second field indicates whether the multi-millisecond ranging packet in the ranging phase comprises the synchronization header.

6. The method according to claim 4 or 5, wherein the common physical layer configuration field further comprises a third field; and
the third field indicates a preamble sequence used for the UWB packet in the control phase and/or the report phase; or
the third field indicates a preamble sequence used for the UWB packet in the control phase and/or the report phase, and a preamble sequence used for the synchronization header in the multi-millisecond ranging packet in the ranging phase.

7. The method according to any one of claims 4 to 6, wherein the UWB packet meets one or more of the following conditions: a data rate is 1.95 Mbps, a synchronization field comprises 64 preamble symbols, a start-of-frame delimiter SFD sequence is [-1 -1 -1 +1 -1 -1 +1 -1], or a length of an SFD field is 8.

8. The method according to any one of claims 1 to 7, wherein a same wireless technology is used in the control phase and the report phase.

9. The method according to claim 1, wherein the method further comprises:
sending or receiving a physical layer management field, wherein the physical layer management field comprises a control phase configuration field and a report phase configuration field;
the control phase configuration field indicates a physical layer configuration of offset quadrature phase shift keying O-QPSK modulation for the narrowband signal that shares the common clock with the UWB in the control phase; and
the report phase configuration field indicates a physical layer configuration of O-QPSK modulation for the narrowband signal that shares the common clock with the UWB in the report phase.

10. The method according to claim 2, wherein the method further comprises:
receiving or sending a physical layer management field, wherein the physical layer management field comprises a control phase configuration field and a report phase configuration field;
the control phase configuration field indicates a physical layer configuration of offset quadrature phase shift keying O-QPSK modulation for the narrowband signal that shares the common clock with the UWB in the control phase; and
the report phase configuration field indicates a physical layer configuration of O-QPSK modulation for the narrowband signal that shares the common clock with the UWB in the report phase.

11. The method according to any one of claims 1 to 10, wherein the common physical layer configuration field is comprised in any one of the following messages: a start of ranging message in the initialization and setup phase, a response message in the initialization and setup phase, a poll message in the control phase, a response message in the control phase, or a message in the report phase.

12. The method according to any one of claims 1 to 11, wherein the common physical layer configuration field is comprised in the start of ranging message in the initialization and setup phase, and content indicated by the common physical layer configuration field is used in one or more ranging cycles after the initialization and setup phase; or
the common physical layer configuration field is comprised in the response message in the initialization and setup phase, and content indicated by the common physical layer configuration field is a suggested parameter from a responder for one or more ranging cycles after the initialization and setup phase.

13. The method according to any one of claims 1 to 11, wherein the common physical layer configuration field is comprised in the poll message in the control phase; and
content indicated by the first field is not used, and both content indicated by the second field and content indicated by the third field in the common physical layer configuration field are used in a ranging cycle in which the common physical layer configuration field is located; or
content indicated by the first field is used in a next ranging cycle of a ranging cycle in which the common physical layer configuration field is located, and both content indicated by the second field and content indicated by the third field in the common physical layer configuration field are used in the ranging cycle in which the common physical layer configuration field is located; or
none of content indicated by the common physical layer configuration field is used; or
content indicated by the first field is a suggested parameter for a next ranging cycle of a ranging cycle in which the common physical layer configuration field is located, and neither content indicated by the second field nor content indicated by the third field in the common physical layer configuration field is used.

14. The method according to any one of claims 1 to 11, wherein the common physical layer configuration field is comprised in the response message in the control phase or the message in the report phase; and
content indicated by the first field is not used, and both content indicated by the second field and content indicated by the third field in the common physical layer configuration field are suggested parameters for a next ranging cycle of a ranging cycle in which the common physical layer configuration field is located; or
content indicated by the common physical layer configuration field is a suggested parameter for a next ranging cycle of a ranging cycle in which the common physical layer configuration field is located; or
content indicated by the common physical layer configuration field is not used; or
content indicated by the first field is a suggested parameter for a next ranging cycle of a ranging cycle in which the common physical layer configuration field is located, and neither content indicated by the second field nor content indicated by the third field in the common physical layer configuration field is used.

15. A physical layer configuration method for ultra-wideband ranging, comprising:
generating a common physical layer configuration field, wherein the common physical layer configuration field comprises a second field, and the second field indicates whether a multi-millisecond ranging packet in a ranging phase comprises a synchronization header; and
sending the common physical layer configuration field.

16. A physical layer configuration method for ultra-wideband ranging, comprising:
receiving a common physical layer configuration field, wherein the common physical layer configuration field comprises a second field, and the second field indicates whether a multi-millisecond ranging packet in a ranging phase comprises a synchronization header; and
processing the common physical layer configuration field.

17. The method according to claim 15 or 16, wherein the common physical layer configuration field further comprises a third field; and
the third field indicates a preamble sequence used for an ultra-wideband UWB packet in a control phase and a report phase, and/or a preamble sequence used for the synchronization header in the multi-millisecond ranging packet in the ranging phase, wherein a configuration of the UWB packet is a scrambled timestamp sequence STS packet configuration 0.

18. The method according to any one of claims 15 to 17, wherein the common physical layer configuration field is comprised in any one of the following messages: a start of ranging message in an initialization and setup phase, a response message in the initialization and setup phase, a poll message in the control phase, a response message in the control phase, or a message in the report phase.

19. The method according to any one of claims 15 to 18, wherein the common physical layer configuration field is comprised in the start of ranging message in the initialization and setup phase, and content indicated by the common physical layer configuration field is used in one or more ranging cycles after the initialization and setup phase; or
the common physical layer configuration field is comprised in the response message in the initialization and setup phase, and content indicated by the common physical layer configuration field is a suggested parameter from a responder for one or more ranging cycles after the initialization and setup phase.

20. The method according to any one of claims 15 to 18, wherein the common physical layer configuration field is comprised in the poll message in the control phase; and
content indicated by the common physical layer configuration field is not used; or
content indicated by the common physical layer configuration field is used in a ranging cycle in which the common physical layer configuration field is located.

21. The method according to any one of claims 15 to 18, wherein the common physical layer configuration field is comprised in the response message in the control phase or the message in the report phase; and
content indicated by the common physical layer configuration field is not used; or
content indicated by the common physical layer configuration field is a suggested parameter for a next ranging cycle of a ranging cycle in which the common physical layer configuration field is located.

22. A physical layer configuration method for ultra-wideband ranging, comprising:
generating a first frame, wherein the first frame comprises a physical layer management field, the physical layer management field comprises a control phase configuration field and a report phase configuration field, the control phase configuration field and the report phase configuration field jointly indicate a combination of wireless technologies used in a ranging session, the ranging session comprises a control phase and a ranging phase, a multi-millisecond ranging packet used in the ranging phase does not comprise a synchronization header, a narrowband signal that shares a common clock with ultra-wideband UWB is used in the control phase or a first UWB packet is used in the control phase, and the first UWB packet comprises a synchronization header; and
sending the first frame.

23. A physical layer configuration method for ultra-wideband ranging, comprising:
receiving a first frame, wherein the first frame comprises a physical layer management field, the physical layer management field comprises a control phase configuration field and a report phase configuration field, the control phase configuration field and the report phase configuration field jointly indicate a combination of wireless technologies used in a ranging session, the ranging session comprises a control phase and a ranging phase, a multi-millisecond ranging packet used in the ranging phase does not comprise a synchronization header, a narrowband signal that shares a common clock with ultra-wideband UWB is used in the control phase or a first UWB packet is used in the control phase, and the first UWB packet comprises a synchronization header; and
processing the first frame.

24. The method according to claim 22 or 23, wherein the combination of the wireless technologies used in the ranging session further comprises:
a narrowband signal that does not share a common clock with ultra-wideband UWB or a narrowband signal that shares a common clock with UWB is used in an initialization and setup phase of the ranging session; and
a narrowband signal that shares a common clock with UWB is used in a report phase of the ranging session or a second UWB packet is used in a report phase of the ranging session.

25. The method according to claim 24, wherein when a value of the control phase configuration field is 14 or 15, or a value of the report phase configuration field is 15, the first frame further comprises a third field; and
the third field indicates a preamble sequence used for the first UWB packet in the control phase and/or the second UWB packet in the report phase.

26. The method according to claim 24 or 25, wherein a physical layer protocol data unit PPDU format of the second UWB packet is a scrambled timestamp sequence STS packet configuration 0.

27. The method according to any one of claims 22 to 26, wherein a PPDU format of the first UWB packet comprises only the synchronization header; or
the first UWB packet comprises two UWB packets, wherein a PPDU format of one UWB packet comprises only the synchronization header, and a PPDU format of the other UWB packet is the STS packet configuration 0.

28. The method according to any one of claims 22 to 27, wherein the first frame is any one of the following messages: a ranging message in the initialization and setup phase, a response message in the initialization and setup phase, a poll message in the control phase, a response message in the control phase, or a message in the report phase.

29. The method according to any one of claims 22 to 28, wherein the first frame is the start of ranging message in the initialization and setup phase, and content indicated by the physical layer management field and/or content indicated by the third field are/is used in one or more ranging cycles after the initialization and setup phase; or
the first frame is the response message in the initialization and setup phase, and content indicated by the physical layer management field and/or content indicated by the third field are/is suggested parameters/a suggested parameter from a responder for one or more ranging cycles after the initialization and setup phase.

30. The method according to any one of claims 22 to 28, wherein the first frame is the poll message in the control phase; and
content indicated by the physical layer management field is not used, and content indicated by the third field in the first frame is used in a ranging cycle in which the first frame is located; or
content indicated by the physical layer management field is used in a next ranging cycle of a ranging cycle in which the first frame is located, and content indicated by the third field in the first frame is used in the ranging cycle in which the first frame is located; or
neither content indicated by the physical layer management field nor content indicated by the third field in the first frame is used; or
content indicated by the physical layer management field is a suggested parameter for a next ranging cycle of a ranging cycle in which the first frame is located, and content indicated by the third field in the first frame is not used.

31. The method according to any one of claims 22 to 28, wherein the first frame is the response message in the control phase or the message in the report phase; and
content indicated by the physical layer management field is not used, and content indicated by the third field in the first frame is a suggested parameter for a next ranging cycle of a ranging cycle in which the first frame is located; or
both content indicated by the physical layer management field and content indicated by the third field in the first frame are suggested parameters for a next ranging cycle of a ranging cycle in which the first frame is located; or
neither content indicated by the physical layer management field nor content indicated by the third field in the first frame is used; or
content indicated by the physical layer management field is a suggested parameter for a next ranging cycle of a ranging cycle in which the first frame is located, and content indicated by the third field in the first frame is not used.

32. A physical layer configuration method for ultra-wideband ranging, comprising:
generating a physical layer management field, wherein the physical layer management field comprises a control phase configuration field; and when a value of the control phase configuration field is a first value, it indicates that a narrowband signal that shares a common clock with ultra-wideband UWB is used in a control phase and a report phase, and a multi-millisecond ranging packet that does not carry a synchronization header is used in a ranging phase, wherein a modulation scheme of the narrowband signal that shares the common clock with the UWB is O-QPSK modulation; or when a value of the control phase configuration field is a second value, it indicates that a UWB packet is used in a control phase and a report phase, and a multi-millisecond ranging packet that carries a synchronization header is used in a ranging phase; and
sending the physical layer management field.

33. The method according to claim 32, wherein the method further comprises:
sending a ranging physical layer configuration field, wherein the ranging physical layer configuration field comprises a sequence code index field, and the sequence code index field indicates a sequence used for a ranging sequence fragment RSF; and
when the value of the control phase configuration field is the second value, the sequence code index field further indicates a preamble sequence used for the UWB packet and a preamble sequence used for the synchronization header in the multi-millisecond ranging packet in the ranging phase.

34. A physical layer configuration method for ultra-wideband ranging, comprising:
receiving a physical layer management field, wherein the physical layer management field comprises a control phase configuration field; and when a value of the control phase configuration field is a first value, it indicates that a narrowband signal that shares a common clock with ultra-wideband UWB is used in a control phase and a report phase, and a multi-millisecond ranging packet that does not carry a synchronization header is used in a ranging phase, wherein a modulation scheme of the narrowband signal that shares the common clock with the UWB is O-QPSK modulation; or when a value of the control phase configuration field is a second value, it indicates that a UWB packet is used in a control phase and a report phase, and a multi-millisecond ranging packet that carries a synchronization header is used in a ranging phase; and
processing the physical layer management field.

35. The method according to claim 34, wherein the method further comprises:
receiving a ranging physical layer configuration field, wherein the ranging physical layer configuration field comprises a sequence code index field, and the sequence code index field indicates a sequence used for a ranging sequence fragment RSF; and
when the value of the control phase configuration field is the second value, the sequence code index field further indicates a preamble sequence used for the UWB packet and a preamble sequence used for the synchronization header in the multi-millisecond ranging packet in the ranging phase.

36. The method according to any one of claims 32 to 35, wherein the first value is any value within a first range, and the second value is a value outside the first range; and
when the value of the control phase configuration field is the first value, it further indicates a physical layer configuration of offset quadrature phase shift keying O-QPSK modulation in the control phase.

37. The method according to any one of claims 32 to 36, wherein the UWB packet meets one or more of the following conditions: a data rate is 1.95 Mbps, a synchronization field comprises 64 preamble symbols, a start-of-frame delimiter SFD sequence is [-1 -1 -1 +1 -1 -1 +1 -1], or a length of an SFD field is 8.

38. The method according to any one of claims 32 to 37, wherein the physical layer management field further comprises a report phase configuration field, and the report phase configuration field indicates a physical layer configuration in the report phase.

39. A physical layer configuration method for ultra-wideband ranging, comprising:
generating a physical layer management field, wherein the physical layer management field comprises a report phase configuration field; and when a value of the report phase configuration field is a first value, it indicates that a narrowband signal that shares a common clock with ultra-wideband UWB is used in a control phase and a report phase, and a multi-millisecond ranging packet that does not carry a synchronization header is used in a ranging phase, wherein a modulation scheme of the narrowband signal that shares the common clock with the UWB is O-QPSK modulation; or when a value of the report phase configuration field is a second value, it indicates that a UWB packet is used in a control phase and a report phase, and a multi-millisecond ranging packet that carries a synchronization header is used in a ranging phase; and
sending the physical layer management field.

40. The method according to claim 39, wherein the method further comprises:
sending a ranging physical layer configuration field, wherein the ranging physical layer configuration field comprises a sequence code index field, and the sequence code index field indicates a sequence used for a ranging sequence fragment RSF; and
when the value of the report phase configuration field is the second value, the sequence code index field further indicates a preamble sequence used for the UWB packet and a preamble sequence used for the synchronization header in the multi-millisecond ranging packet in the ranging phase.

41. A physical layer configuration method for ultra-wideband ranging, comprising:
receiving a physical layer management field, wherein the physical layer management field comprises a report phase configuration field; and when a value of the report phase configuration field is a first value, it indicates that a narrowband signal that shares a common clock with ultra-wideband UWB is used in a control phase and a report phase, and a multi-millisecond ranging packet that does not carry a synchronization header is used in a ranging phase, wherein a modulation scheme of the narrowband signal that shares the common clock with the UWB is O-QPSK modulation; or when a value of the report phase configuration field is a second value, it indicates that a UWB packet is used in a control phase and a report phase, and a multi-millisecond ranging packet that carries a synchronization header is used in a ranging phase; and
processing the physical layer management field.

42. The method according to claim 41, wherein the method further comprises:
receiving a ranging physical layer configuration field, wherein the ranging physical layer configuration field comprises a sequence code index field, and the sequence code index field indicates a sequence used for a ranging sequence fragment RSF; and
when the value of the report phase configuration field is the second value, the sequence code index field further indicates a preamble sequence used for the UWB packet and a preamble sequence used for the synchronization header in the multi-millisecond ranging packet in the ranging phase.

43. The method according to any one of claims 39 to 42, wherein the first value is any value within a first range, and the second value is a value outside the first range; and
when the value of the report phase configuration field is the first value, it further indicates a physical layer configuration of offset quadrature phase shift keying O-QPSK modulation in the report phase.

44. The method according to any one of claims 39 to 43, wherein the UWB packet meets one or more of the following conditions: a data rate is 1.95 Mbps, a synchronization field comprises 64 preamble symbols, a start-of-frame delimiter SFD sequence is [-1 -1 -1 +1 -1 -1 +1 -1], or a length of an SFD field is 8.

45. The method according to any one of claims 39 to 44, wherein the physical layer management field further comprises a control phase configuration field; and
when a value of the control phase configuration field is a value within a second range, it indicates a physical layer configuration of O-QPSK modulation in the control phase; or when a value of the control phase configuration field is another value outside the second range, it indicates reserved.

46. A physical layer configuration method for ultra-wideband ranging, comprising:
generating a physical layer management field, wherein the physical layer management field comprises a control phase configuration field and a report phase configuration field; and when a value of the control phase configuration field is a first value, and a value of the report phase configuration field is a third value, it indicates that a narrowband signal that shares a common clock with ultra-wideband UWB is used in both a control phase and a report phase, and a multi-millisecond ranging packet that does not carry a synchronization header is used in a ranging phase; or when a value of the control phase configuration field is a second value, and a value of the report phase configuration field is a fourth value, it indicates that a UWB packet is used in both a control phase and a report phase, and a multi-millisecond ranging packet that carries a synchronization header is used in a ranging phase, wherein a modulation scheme of the narrowband signal that shares the common clock with the UWB is offset quadrature phase shift keying O-QPSK modulation, and a same wireless technology is used in the control phase and the report phase; and
sending the physical layer management field.

47. The method according to claim 46, wherein the method further comprises:
sending a ranging physical layer configuration field, wherein the ranging physical layer configuration field comprises a sequence code index field, and the sequence code index field indicates a sequence used for a ranging sequence fragment RSF; and
when the value of the control phase configuration field is the second value, and the value of the report phase configuration field is the fourth value, the sequence code index field further indicates a preamble sequence used for the UWB packet and a preamble sequence used for the synchronization header in the multi-millisecond ranging packet in the ranging phase.

48. A physical layer configuration method for ultra-wideband ranging, comprising:
receiving a physical layer management field, wherein the physical layer management field comprises a control phase configuration field and a report phase configuration field; and when a value of the control phase configuration field is a first value, and a value of the report phase configuration field is a third value, it indicates that a narrowband signal that shares a common clock with ultra-wideband UWB is used in both a control phase and a report phase, and a multi-millisecond ranging packet that does not carry a synchronization header is used in a ranging phase; or when a value of the control phase configuration field is a second value, and a value of the report phase configuration field is a fourth value, it indicates that a UWB packet is used in both a control phase and a report phase, and a multi-millisecond ranging packet that carries a synchronization header is used in a ranging phase, wherein a modulation scheme of the narrowband signal that shares the common clock with the UWB is offset quadrature phase shift keying O-QPSK modulation, and a same wireless technology is used in the control phase and the report phase; and
processing the physical layer management field.

49. The method according to claim 48, wherein the method further comprises:
receiving a ranging physical layer configuration field, wherein the ranging physical layer configuration field comprises a sequence code index field, and the sequence code index field indicates a sequence used for a ranging sequence fragment RSF; and
when the value of the control phase configuration field is the second value, and the value of the report phase configuration field is the fourth value, the sequence code index field further indicates a preamble sequence used for the UWB packet and a preamble sequence used for the synchronization header in the multi-millisecond ranging packet in the ranging phase.

50. The method according to any one of claims 46 to 49, wherein the first value is any value within a first range, and the second value is a value outside the first range; and
when the value of the control phase configuration field is the first value, it indicates a physical layer configuration of offset quadrature phase shift keying O-QPSK modulation in the control phase; or when the value of the control phase configuration field is the second value, it indicates that the UWB packet is used in the control phase.

51. The method according to any one of claims 46 to 50, wherein the third value is any value within a second range, and the fourth value is a value outside the second range; and
when the value of the report phase configuration field is the third value, it indicates a physical layer configuration of offset quadrature phase shift keying O-QPSK modulation in the control phase; or when the value of the report phase configuration field is the fourth value, it indicates that the UWB packet is used in the report phase.

52. The method according to any one of claims 46 to 51, wherein the UWB packet meets one or more of the following conditions: a data rate is 1.95 Mbps, a synchronization field comprises 64 preamble symbols, a start-of-frame delimiter SFD sequence is [-1 -1 -1 +1 -1 -1 +1 -1], or a length of an SFD field is 8.

53. A communication apparatus, comprising a module configured to perform the method according to any one of claims 1 to 52.

54. A communication apparatus, comprising:
one or more processors, wherein the one or more processors are coupled to one or more memories, wherein
the one or more memories are configured to store a computer program, and the one or more processors are configured to execute the computer program stored in the one or more memories, to enable the communication apparatus to perform the method according to any one of claims 1 to 52.

55. A communication apparatus, comprising a logic circuit and an interface, wherein the logic circuit is coupled to the interface; and
the interface is configured to input and/or output information, and the logic circuit is configured to perform the method according to any one of claims 1 to 52.

56. A readable storage medium, configured to store a program, wherein the program is executed by one or more processors, to enable an apparatus comprising the one or more processors to perform the method according to any one of claims 1 to 52.

57. A computer program product, wherein when the computer program product is executed, the method according to any one of claims 1 to 52 is performed.

58. A wireless communication system, wherein the wireless communication system comprises a communication apparatus configured to perform the method according to any one of claims 1, 3 to 9, and 11 to 14, and a communication apparatus configured to perform the method according to any one of claims 2 to 8 and 10 to 14; or
the wireless communication system comprises a communication apparatus configured to perform the method according to any one of claims 15 and 17 to 21, and a communication apparatus configured to perform the method according to any one of claims 16 to 21; or
the wireless communication system comprises a communication apparatus configured to perform the method according to any one of claims 22 and 24 to 31, and a communication apparatus configured to perform the method according to any one of claims 23 to 31; or
the wireless communication system comprises a communication apparatus configured to perform the method according to any one of claims 32, 33, and 36 to 38, and a communication apparatus configured to perform the method according to any one of claims 34 to 38; or
the wireless communication system comprises a communication apparatus configured to perform the method according to any one of claims 39, 40, and 43 to 45, and a communication apparatus configured to perform the method according to any one of claims 41 to 45; or
the wireless communication system comprises a communication apparatus configured to perform the method according to any one of claims 46, 47, and 50 to 52, and a communication apparatus configured to perform the method according to any one of claims 48 to 52.
